(19) Europäisches Patentamt / European Patent Office / Office européen des brevets

(11) **EP 2 709 267 B1**

(12) **EUROPEAN PATENT SPECIFICATION**

(45) Date of publication and mention
of the grant of the patent:
**12.08.2020 Bulletin 2020/33**

(21) Application number: **11865668.5**

(22) Date of filing: **13.05.2011**

(51) Int Cl.:
**H02P 21/00** *(2016.01)*  **H02P 27/04** *(2016.01)*

(86) International application number:
**PCT/JP2011/061029**

(87) International publication number:
**WO 2012/157039 (22.11.2012 Gazette 2012/47)**

(54) **DRIVE SYSTEM FOR SYNCHRONOUS MOTOR**

ANTRIEBSSYSTEM FÜR EINEN ELEKTRISCHEN SYNCHRONMOTOR

SYSTÈME D'ENTRAÎNEMENT POUR MOTEUR SYNCHRONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.03.2014 Bulletin 2014/12**

(73) Proprietor: **Hitachi, Ltd.**
**Tokyo 100-8280 (JP)**

(72) Inventors:
• **IWAJI, Yoshitaka**
**Chiyoda-ku, Tokyo 100-8280 (JP)**
• **AOYAGI, Shigehisa**
**Chiyoda-ku, Tokyo 100-8280 (JP)**
• **TAKAHATA, Ryoichi**
**Chiyoda-ku, Tokyo 100-8280 (JP)**
• **TOBARI, Kazuaki**
**Chiyoda-ku, Tokyo 100-8280 (JP)**

(74) Representative: **Manitz Finsterwald**
**Patent- und Rechtsanwaltspartnerschaft mbB**
**Postfach 31 02 20**
**80102 München (DE)**

(56) References cited:
JP-A- 11 146 685       JP-A- 2007 221 967
JP-A- 2007 221 968     JP-A- 2007 236 062
US-A1- 2007 194 730    US-A1- 2010 066 284
US-A1- 2011 012 544    US-A1- 2011 057 593

**Description**

Technical Field

The present invention relates to a driving system for a synchronous motor used for controlling torque such as a motor driving device, for example, rotation speed control for a fan, a pump, a compressor, and a spindle motor, a positioning apparatus for a conveyer and a machine tool, and electric-power assisting.

Background Art

In various kinds of fields such as industrial, home electronic appliances, and automobiles, small and highly-efficient permanent magnet motors (three-phase synchronous motors) are widely used.

However, in order to drive the permanent magnet motor, it is necessary to have position information of the rotor of the motor, and a position sensor therefor is required. In recent years, sensor-less control is widely prevalent, in which this position sensor is eliminated, and the torque control and the rotation speed of the permanent magnet motor are controlled.

As the sensor-less control is put into practice, the expenses concerning the position sensor (the cost of the sensor itself, the wirings for the sensor, and the like) can be reduced, and the size of the apparatus can be reduced. Since the sensor is unnecessary, there is an advantage in that it can be used in adverse environment.

Currently, the sensor-less control for the permanent magnet motor employs, e.g., a method for directly detecting induced voltage (speed electromotive force) induced when the rotor of the permanent magnet motor rotates and driving the permanent magnet motor using it as the position information of the rotor, and a position estimation technique for estimating and calculating the rotor position from the mathematical model of the target motor.

These sensor-less controls also involve great problem. That is the position detection method during the low speed operation. Most of the sensor-less controls currently put into practice are based on the induced voltage induced by the permanent magnet motor. Therefore, in a stopped or low speed region in which the induced voltage is small, the sensitivity is reduced, and the position information may be buried in the noise. For this problem, various kinds of solution methods have been suggested.

The invention described in PTL 1 is a method for applying radio frequency wave to the permanent magnet motor, and detecting the rotor position on the basis of a current generated at that moment. The rotor of the permanent magnet motor requires saliency, and the position can be detected due to the current harmonics caused by the salient structure.

The invention described in PTL 2 is to obtain position information by detecting "neutral point potential" which is a potential at the connection point of three-phase stator winding. Although this requires arranging the neutral point of the stator winding, the position information can be obtained even when the three-phase is simultaneously energized in contrast to PTL 3 explained below. Therefore, the permanent magnet motor can be driven with a sinusoidal current in an ideal manner.

The invention described in PTL 3 is a driving method based on 120 degrees energizing method in which two phases of the three-phase stator windings of an electric motor are selected and energized, and the position of the rotor is detected based on the generated voltage occurring in the non-energized phase (this is not the generated voltage due to the speed but is the generated voltage due to unbalance of inductance). In this method, since the generated voltage occurring in accordance with the position is used, the position information can be obtained even if the motor is completely at a stop.

Like the method described in PTL 2, the invention described in PTL 4 is to obtain position information by detecting "neutral point potential" which is a potential at the connection point of three-phase stator winding. By detecting the neutral point potential in synchronization with PWM (pulse wave modulation) wave of the inverter, the generated voltage due to unbalance of inductance can be detected just like PTL 3, and as a result the position information about the rotor can be obtained. With the method of PTL 4, the driving waveform can be an ideal sinusoidal current.

Citation List

Patent Literature

PTL 1: JP 7-245981 A
PTL 2: JP 2000-232797 A
PTL 3: JP 2009-189176 A

PTL 4: JP 2010-74898 A

Summary of Invention

Technical Problem

However, in the invention described in PTL 1, the rotor structure of the motor requires saliency. Those with no or little saliency have lower degree of position detection sensitivity, which makes the position estimation difficult. In order to perform sensitive detection, it is necessary to increase the injected radio frequency wave component or to lower the frequency. As a result, this causes rotation pulsation, vibration, and noise, or greatly increases the harmonic loss of the motor.

In the invention described in PTL 2, the third harmonic voltage generated at the neutral point potential is used. For this reason, the rotor structure is not required to have saliency, and the driving current can be sine wave. However, the induced voltage itself of this third harmonic is speed electromotive force due to the rotation of the permanent magnet motor, and therefore it is impossible to obtain position information in a low speed region, and it is impossible to drive at around zero speed.

The invention of PTL 3 is a method for observing the generated voltage occurring in the non-energized phase of the three-phase winding, and it is possible to drive from the stopped state of the motor, but there is a problem in that the driving current waveform becomes 120 degrees energization (square wave). Originally, it is more advantageous to drive the permanent magnet motor using the sinusoidal current in terms of suppression of nonuniformity of rotation and suppressing the harmonic loss, but in the invention described in PTL 3, the sinusoidal driving is impossible.

Like PTL 2, the invention described in PTL 4 is to obtain position information by detecting "neutral point potential" which is a potential at the connection point of three-phase stator winding. By detecting this neutral point potential in synchronization with the pulse voltage applied from the inverter to the motor, the potential change depending upon the rotor position can be obtained. In PTL 4, the position information can also be obtained using PWM (pulse width modulation) obtained by normal sinusoidal modulation as the voltage applied to the motor.

A part of the present invention is related to the invention described in PTL4, and therefore, the details of which will be explained.

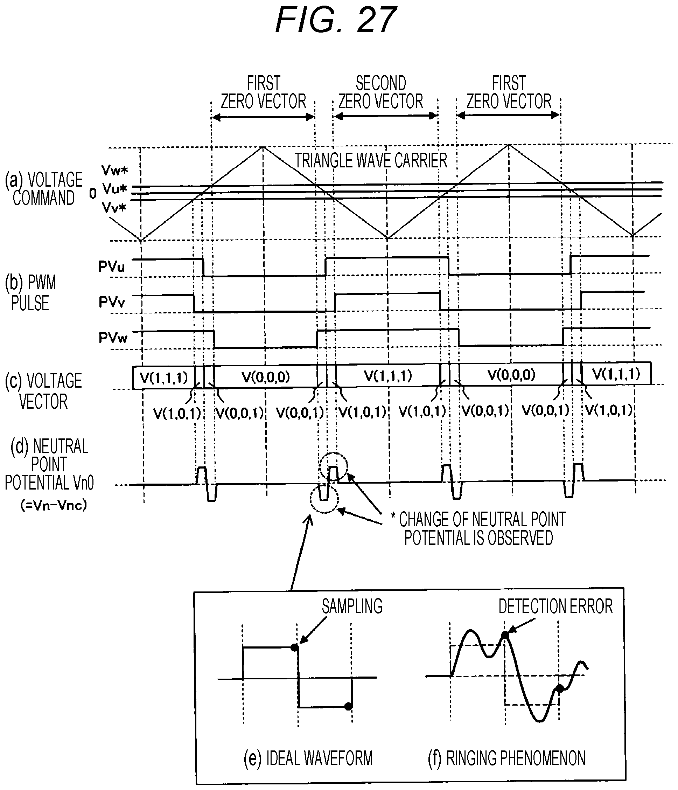

FIG. 27 illustrates PWM waveform described in PTL 4 and neutral point potential waveform at this occasion. By comparing three-phase voltage commands Vu*, Vv*, Vw* and triangle wave carrier, PWM pulse waveforms PVu, PVv, PVw are generated. The three-phase voltage commands Vu*, Vv*, Vw* are in sinusoidal waveform, but during low speed driving, they can be deemed as sufficiently low frequency as compared with the triangle wave carrier, and therefore, at any given instance, they may be substantially deemed as direct currents as shown in FIG. 27. PVu, PVv, PVw which are PWM pulse waves repeat ON/OFF state with different timing. In the figure, the voltage vector of (c) has a name such as V (0, 0, 1), but the subscripts (0, 0, 1) thereof means the switch state of U, V, W-phases, respectively. More specifically, V (0, 0, 1) means as follows: U-phase PVu = 0, V-phase PVv = 0, W-phase PVw = 1. In this case, V (0, 0, 0) and V (1, 1, 1) are zero vectors where the applied voltage to the motor is zero.

As illustrated in these waveforms, the normal PWM wave generates two types of voltage vectors V (0, 0, 1) and V (1, 0, 1) between the first zero vector V (0, 0, 0) and the second zero vector V (1, 1, 1). More specifically, the following cycle is repeated: V (0, 0, 0) → V (0, 0, 1) → V (1, 0, 1) → V (1, 1, 1) → V (1, 0, 1) → V (0, 0, 1) → V (0, 0, 0). The same voltage vectors used between the zero vectors are used in a period in which the magnitude relationship between the three-phase voltage commands Vu*, Vv*, V* do not change.

While a voltage other than the zero vector is applied, the generated voltage according to the rotor position occurs at the neutral point potential. PTL 4 describes a method for estimating the rotor position by using this.

However, when this method is used to detect the neutral point potential at a very low speed, there are many problems in practice. For example, in the applied voltage at the stopped state, only the voltage effect due to the winding resistance of the motor is applied, and therefore, the voltage is of an extremely small pulse width. In the case of the PWM waveform, ringing (oscillation at several hundred kHz to several MHz immediately after switching) always occurs in accordance with switching of the inverter, and therefore, the actual neutral point potential has a waveform as shown in (f) of FIG. 27. At an extremely small pulse width, oscillation due to this ringing remains, and this makes it impossible to detect a value required for obtaining the position information as the neutral point potential. In order to prevent this, there is no way but to restrict the minimum value of the pulse width, and as a result, this makes it difficult to drive at an extremely low speed. Concerning the problem of the position estimation algorithm described in PTL 4, there is no way but to basically depend on table data.

PTL 4 also discloses, as a method for improving the position estimation sensitivity, a method for forcibly applying a position estimation voltage pulse during zero vector application period. According to this method, although this is a method different from normal PWM, the position can be estimated with a high degree of sensitivity. However, due to switching pattern completely different from normal PWM, there are various kinds of adverse effects. First, because the number of switching of PWM is increased, the switching loss of the inverter is increased. In contrast to the permanent magnet motor which is advantageous in the high efficiency, the loss of the inverter increases, which is a great drawback. Secondly, it requires special PWM, and therefore, PWM function provided in a generally-available micro computer cannot be used, and dedicated control is required. For this reason, the cost increases, the size of the apparatus is increased.

US 2011/0057593 A1 discloses a control system for an electric motor measuring the neutral point voltage for position estimation. The required inverter states are adjusted by shifting the PWM patterns.

US 2010/0066284 A1 discloses a drive system for an electric motor measuring the neutral point voltage for position estimation.

US 2007/0194730 A1 discloses a drive device for an electric motor measuring the neutral point voltage for position estimation. The required inverter states are adjust

US 2011/0012544 A1 discloses a position estimation system for an electric motor measuring the neutral point voltage for position estimation. The required inverter states are adjust

An object of the present invention is to provide a driving system for a synchronous motor exhibiting reduced switching losses.

Solution to the Problem

This object is accomplished by the features of the independnet claims.

In an aspect of the present invention, in a driving system for a synchronous motor for feeding a three-phase synchronous motor from a pulse width modulation inverter and controlling the inverter by estimating rotor position on the basis of the neutral point potential of the synchronous motor, in a period of one cycle of pulse width modulation of the inverter, three or four types of switch states of which output voltage of the inverter is not zero vector are generated by shifting timing of switching of each phase, the neutral point potentials of at least two kinds of switch states thereof are sampled, and rotor position of the three-phase synchronous motor is estimated. One of the three phases is maintained in always positive or always negative state during a carrier cycle.

Output voltage pulses of one or two phases are shifted in terms of time so that timing with which switch state of each phase is switched from positive to negative and from negative to positive is configured not to be close to each other by a predetermined time width or less.

Advantageous Effects of Invention

According to a driving system for a three-phase synchronous motor concerning a desired embodiment of the present invention, sensor-less driving with a sinusoidal current can be achieved at a speed as low as an extremely low speed region which is close to zero speed.

According to a driving system for a three-phase synchronous motor concerning a desired embodiment of the present invention, a driving system for a synchronous motor that can drive with a high degree of efficiency can be provided without increasing the number of switching.

Other objects and features of the present invention would become apparent from the embodiments, wherein a third embodiment is directed to the present invention, described below.

Brief Description of Drawings

[FIG. 1] FIG. 1 is a block diagram illustrating a configuration of a motor driving system according to a first embodiment.
[FIG. 2] FIG. 2 is a vector plot illustrating switching state of inverter output voltage.
[FIG. 3] FIG. 3 is a conceptual diagram illustrating relationship between a virtual neutral point circuit and a permanent magnet motor in a state in which a voltage vector V is applied.
[FIG. 4] FIG. 4 is a figure illustrating actual pulse width modulation using triangle wave carrier, voltage at that occasion, and change of neutral point potential.
[FIG. 5] FIG. 5 is voltage vector and a name of neutral point potential detected at that occasion.
[FIG. 6] FIG. 6 is a figure illustrating actual pulse width modulation using triangle wave carrier, voltage at that occasion, and change of neutral point potential.
[FIG. 7] FIG. 7 is a figure illustrating actual pulse width modulation using triangle wave carrier, voltage at that occasion, and change of neutral point potential according to a third embodiment in accordance with the claimed invention.
[FIG. 8] FIG. 8 is a block diagram illustrating a configuration of a control device of a motor driving system according to a fourth embodiment.

[FIG. 9] FIG. 9 is a block diagram illustrating a configuration of a voltage compensation device of the motor driving system according to the fourth embodiment.

[FIG. 10] FIG. 10 is a figure illustrating actual pulse width modulation using triangle wave carrier, voltage at that occasion, and change of neutral point potential according to the fourth embodiment.

[FIG. 11] FIG. 11 is a block diagram illustrating a configuration of a position estimation device of a motor driving system according to a fifth embodiment.

[FIG. 12] FIG. 12 is a block diagram illustrating another configuration of a position estimation device of a motor driving system according to the fifth embodiment.

[FIG. 13] FIG. 13 is a figure illustrating change of neutral point potential detection values VnA, VnB, VnC, VnD, VnE, VnF with respect to a rotor position θd according to the fifth embodiment.

[FIG. 14] FIG. 14 is a figure showing that, by changing some of the signs of the neutral point potential detection values, they can be deemed as three-phase alternate currents according to the fifth embodiment.

[FIG. 15] FIG. 15 is a figure illustrating a result of position estimation according to the fifth embodiment.

[FIG. 16] FIG. 16 is a block diagram illustrating a configuration of a control device of a motor driving system according to a sixth embodiment.

[FIG. 17] FIG. 17 is a figure illustrating a result of position estimation with the motor driving system according to the sixth embodiment.

[FIG. 18] FIG. 18 is a block diagram illustrating a configuration of a control device of a motor driving system according to a seventh embodiment.

[FIG. 19] FIG. 19 is a block diagram illustrating a configuration of an analog detection unit of a motor driving system according to the seventh embodiment.

[FIG. 20] FIG. 20 is a diagram schematically illustrating current detection of the motor driving system and neutral point voltage detection which are alternately performed according to the seventh embodiment.

[FIG. 21] FIG. 21 is a block diagram illustrating a configuration of a control device of a motor driving system according to an eighth embodiment.

[FIG. 22] FIG. 22 is a block diagram illustrating a configuration of an integrated motor driving system according to a ninth embodiment.

[FIG. 23] FIG. 23 is a block diagram illustrating a configuration of a hydraulic pump system according to a tenth embodiment.

[FIG. 24] FIG. 24 is a block diagram illustrating a configuration of a hydraulic pump system according to the tenth embodiment, in which a relief valve is removed.

[FIG. 25] FIG. 25 is a block diagram illustrating a configuration of an air conditioning system according to an eleventh embodiment.

[FIG. 26] FIG. 26 is a block diagram illustrating a configuration of a positioning control system according to a twelfth embodiment.

[FIG. 27] FIG. 27 is a figure illustrating actual pulse width modulation using triangle wave carrier, voltage at that occasion, and change of neutral point potential in a conventional example.

Description of Embodiments

Hereinafter, embodiments will be explained with reference to drawings.

(First embodiment)

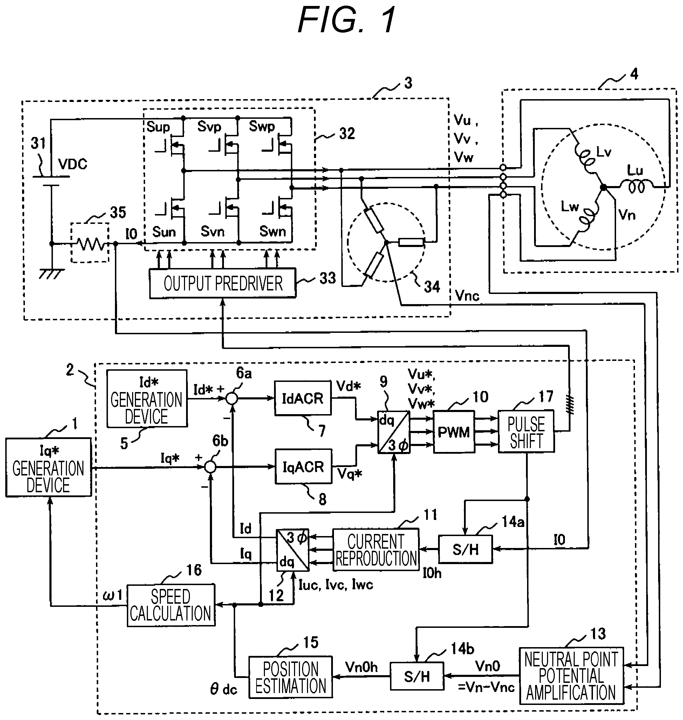

FIG. 1 is a block diagram illustrating a configuration of a motor driving system according to a first embodiment.

An object of this motor driving system is to drive a permanent magnet motor (three-phase synchronous motor) 4. Roughly speaking, this motor driving system includes an Iq* generation device 1, a control device 2, an inverter main circuit 32, an inverter 3 including a one-shunt current detection device 35, and a permanent magnet motor 4 which is target of driving.

The Iq* generation device 1 is a circuit for generating a current command Iq* corresponding to torque of an electric motor. This Iq* generation device 1 is a control device located above the control device 2. Usually, this has a mechanism of generating required current command Iq* by observing an actual speed ω1 so that the rotation speed of the permanent magnet motor 4 attains a predetermined speed. The current command Iq* which is output of the Iq* generation device 1 is output to a calculation device 6b in the control device 2.

The control device 2 operates so that the permanent magnet motor 4 generates torque corresponding to the current command Iq*. This control device 2 includes an Id* generation device (d axis current command generation device) 5, a subtraction device 6a, a subtraction device 6b, a d axis current control device (IdACR) 7, a q axis current control device (IqACR) 8, a dq inverse-transformation device 9, a PWM generation device 10, a current reproduction device 11, a dq transformation device 12, a neutral point potential amplification device 13, a sample/hold circuit 14a, 14b, a position estimation device 15, a speed calculation device 16, and a pulse shift device 17.

The inverter 3 includes not only the inverter main circuit 32 and the one-shunt current detection device 35 explained above but also a direct current power supply 31, an output pre-driver 33, and a virtual neutral point circuit 34.

The Id* generation device 5 generates a current command Id* of a d axis current corresponding to an excitation current of the permanent magnet motor. This current command Id* is output to the subtraction device 6a.

The subtraction device 6a is a subtraction device for deriving deviation of an output Id of the dq transformation device 12 derived and reproduced from output of the inverter main circuit unit 32 and the current command Id* which is the output of the Id* generation device 5. On the other hand, the subtraction device 6b is a subtraction device for deriving deviation of an output Iq of the dq transformation device 12 derived and reproduced from output of the inverter main circuit unit 32 and the current command Iq* which is the output of the Iq* generation device 1. The d axis current control device (IdACR) 7 calculates the voltage command Vd* on the dq coordinate axis so that the current deviation of the subtraction device 6a becomes zero. On the other hand, the q axis current control device (IqACR) 8 calculates the voltage command Vq* on the dq coordinate axis so that the current deviation of the subtraction device 6b becomes zero. The output of the q axis current control device 8 and the voltage command Vd* which is the output of the d axis current control device 7 are output to the dq inverse-transformation device 9.

The dq inverse-transformation device 9 is a circuit for transforming the voltage commands Vd*, Vq* of the dq coordinate (magnetic flux axis - magnetic flux axis perpendicular axis) system onto the three-phase alternate current coordinate. The dq inverse-transformation device 9 performs transformation into control signals Vu*, Vv*, Vw* of the three-phase alternate current coordinate system on the basis of the received voltage commands Vd*, Vq* and the output θdc of the position estimation device 15. The dq inverse-transformation device 9 outputs the transformation result to the PWM generation device 10.

The PWM generation device 10 outputs the PWM (Pulse Width Modulation) signal which is the basis of the switch operation of the inverter main circuit 32. The PWM generation device 10 generates PVu, PVv, PVw which are PWM waveforms on the basis of the three-phase alternate current voltage commands Vu*, Vv*, Vw*. The output as well as the output pre-driver 33 is input into the sample/hold circuit 14a, and 14b via the pulse shift device 17 which is the feature of the present embodiment.

The current reproduction device 11 is a circuit for reproducing each current of U-phase, V-phase, W-phase upon receiving an I0 signal which is output from the inverter main circuit unit 32 to the one-shunt current detection device 35. The reproduced currents (Iuc, Ivc, Iwc) of the phases are output to the dq transformation device 12.

The dq transformation device 12 transforms Iuc, Ivc, Iwc which are reproduced values of the phase currents of the motor into Id, Iq on the dq coordinate which is the rotation coordinate axes. The transformed Id and Iq are used for deviation calculation of the current command Id* and the current command Iq* by the subtraction devices 6a, and 6b.

The neutral point potential amplification device 13 is a circuit for detecting and amplifying difference (hereinafter referred to as neutral point potential Vn0) between the three-phase winding connection point potential Vn of the permanent magnet motor 4 and the virtual neutral point potential Vnc which is the output of the virtual neutral point circuit 34. The amplification result of the neutral point potential amplification device 13 is input into the sample/hold circuit 14b.

The sample/hold circuit 14b is an A-D conversion device for sampling/quantizing (sampling) the analog signal output of the neutral point potential amplification device 13. The sample/hold circuit 14b samples this Vn0 in synchronization with the PWM pulse which is the output of the PWM generation device 10. The sample/hold circuit 14b outputs the sampled result (Vn0h) to the position estimation device 15 as a digital signal.

The position estimation device 15 calculates an estimation value θdc of the rotor position (phase angle) θd of the permanent magnet motor 4 on the basis of the neutral point potential sampled by the sample/hold circuit 14b. This estimation result is output to the speed calculation device 16, the dq transformation device 12, and the dq inverse-transformation device 9.

The speed calculation device 16 is a circuit for calculating the rotation speed of the permanent magnet motor from the estimation value θdc of the rotor position. This estimated rotation speed ω1 is output to the Iq* generation device 1, and is used for current control of the axis perpendicular to the magnetic flux axis.

The direct current power supply 31 is a direct current power supply providing a current to the inverter 3.

The inverter main circuit unit 32 is an inverter circuit constituted by six switching devices Sup to Swn.

The output pre-driver 33 is a driver for directly driving the inverter main circuit unit 32.

The virtual neutral point circuit 34 is a circuit for generating the virtual neutral point potential with regard to the output voltage of the inverter main circuit unit 32.

The one-shunt current detection device 35 is a current detection device for detecting a provided current I0 to the inverter main circuit unit 32.

Subsequently, basic operation of the motor driving system will be explained.

The present invention is based on vector control technique generally known as a method for linearizing torque of a synchronous motor which is an alternate current motor.

The principle of the vector control technique is a technique for independently controlling a current Iq contributing to the torque and current Id contributing to the magnetic flux on the rotation coordinate axis (dq coordinate axis) based on the rotor position of the motor. The d axis current control device 7, the q axis current control device 8, the dq inverse-transformation device 9, the dq transformation device 12, and the like in FIG. 1 are main portions for achieving the vector control technique.

In the motor driving system of FIG. 1, the Iq* generation device 1 calculates the current command Iq* corresponding to the torque current, and current control is performed so that the current command Iq* matches the actual torque current Iq of the PM motor 4.

In a case of a non-salient permanent magnet motor, the current command Id* is usually given "zero". On the other hand, with a permanent magnet motor of a salient structure or in field weakening control, a negative command may be given as the current command Id*.

The current detection of the permanent magnet motor is preferably configured to detect the phase current provided from the inverter to the permanent magnet motor, but in the current detection of a small permanent magnet motor, the following method is often employed: the direct current is detected, and the phase current is reproduced and calculated within the control device. The method for reproducing and calculating the phase current from the direct current 10 at this occasion is available as a publicly known technique and is not a main portion of the present invention, and therefore, it will be not be explained here.

Subsequently, the principle of operation of the neutral point potential amplification device 13, the sample/hold circuit 14b, the position estimation device 15, and the pulse shift device 17, which are the features of the present invention will be explained.

The potential of the neutral point potential Vn0 of the permanent magnet motor 4 is changed due to the effect of the rotor position of the motor. The basic principle of the present invention is to estimate the rotor position in an opposite manner from the change of the neutral point potential by making use of this principle.

First, the principle of change of the neutral point potential will be explained.

The output potential of each phase of the inverter 3 is determined by ON/OFF state of upper side switches (Sup, Svp, Swp) or lower side switches (Sun, Svn, Swn) of the inverter main circuit 32. These switches are configured such that any one of the upper side or the lower side is ON state and the other thereof is OFF state at all times for each phase. Therefore, the output voltage of the inverter 3 includes totally eight switching patterns.

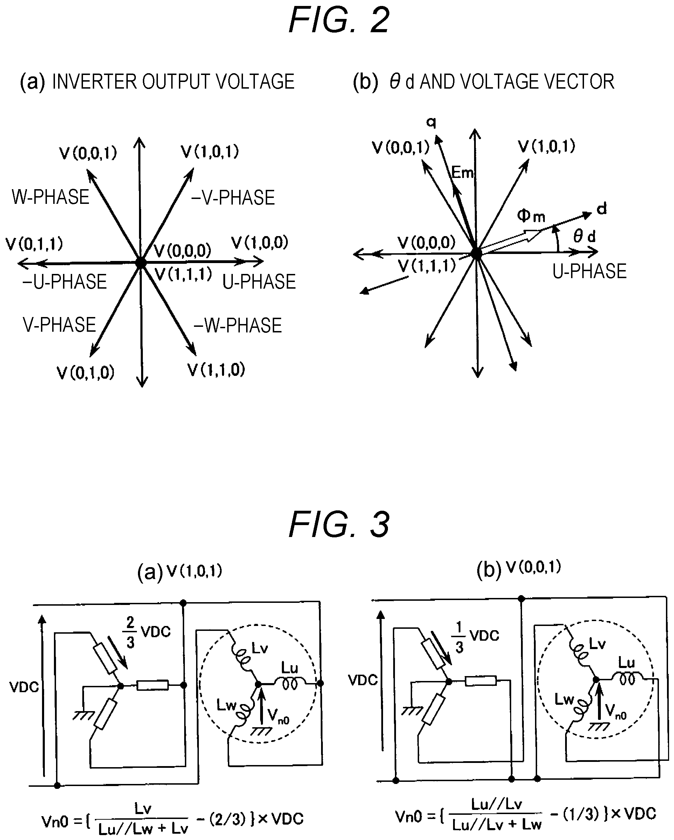

FIG. 2(a) is a vector plot illustrating switching state of inverter output voltage. FIG. 2(b) is a vector plot showing relationship between rotor position (phase) θd and voltage vector.

Each vector is given names such as V (1, 0, 0). The meaning of description of this vector indication is expressed as follows, when the upper side switch is ON, the state is expressed as "1", and when the lower side switch is ON, the state is expressed as "0". The numerals arranged in the parentheses indicate the switching state arranged in the following order: "U-phase, V-phase, W-phase". The inverter output voltage is expressed as eight vectors including two zero vectors. With these combinations, the sinusoidal current is provided to the permanent magnet motor 4.

The U-phase direction is adopted as the reference of the rotor position of the permanent magnet motor 4, and the rotor position (phase) θd is defined as shown in FIG. 2(b). The dq coordinate axis which is the rotation coordinate is such that the d axis direction matches the direction of the magnet Φm, and rotates in a counterclockwise direction.

At around θd = 0 degrees, the induced voltage Em is in the q axis direction as shown in FIG. 2(b). Under this condition, the voltage vectors V (1, 0, 1) and V (0, 0, 1) are mainly used to drive the permanent magnet motor 4.

FIG. 3(a) is a conceptual diagram illustrating relationship between the virtual neutral point circuit 34 and the permanent magnet motor 4 in a state in which a voltage vector V (1, 0, 1) is applied. FIG. 3(b) is a conceptual diagram illustrating relationship between the virtual neutral point circuit 34 and the permanent magnet motor 4 in a state in which a voltage vector V (0, 0, 1) is applied.

The neutral point potential Vn0 can be calculated from the expression below.

When the voltage vector V (1, 0, 1) as shown in FIG. 3(a) is applied, the following expression holds.

$$Vn0 = \{Lv/(Lu//Lw + Lv) - (2/3)\} \times VDC \quad \cdots\cdots\cdots (1)$$

When the voltage vector V (0, 0, 1) as shown in FIG. 3(b) is applied, the following expression holds.

$$Vn0 = \{(Lu//Lv)/(Lu//Lv + Lw) - (1/3)\} \times VDC$$

$$\cdots\cdots\cdots (2)$$

In this case, indication such as Lu//Lv represents a total inductance value of a parallel circuit of inductances Lu and Lv. More specifically, this is (Lu·Lv)/(Lu + Lv) and the like.

In each of the above expressions, when the winding inductances (Lu, Lv, Lw) of the three phases are all the same, the neutral point potential Vn0 is nothing but "zero". However, the actual permanent magnet motor is affected by the permanent magnet magnetic flux of the rotor, and not a little difference occurs in the inductances. The neutral point potential changes due to the difference of the inductances.

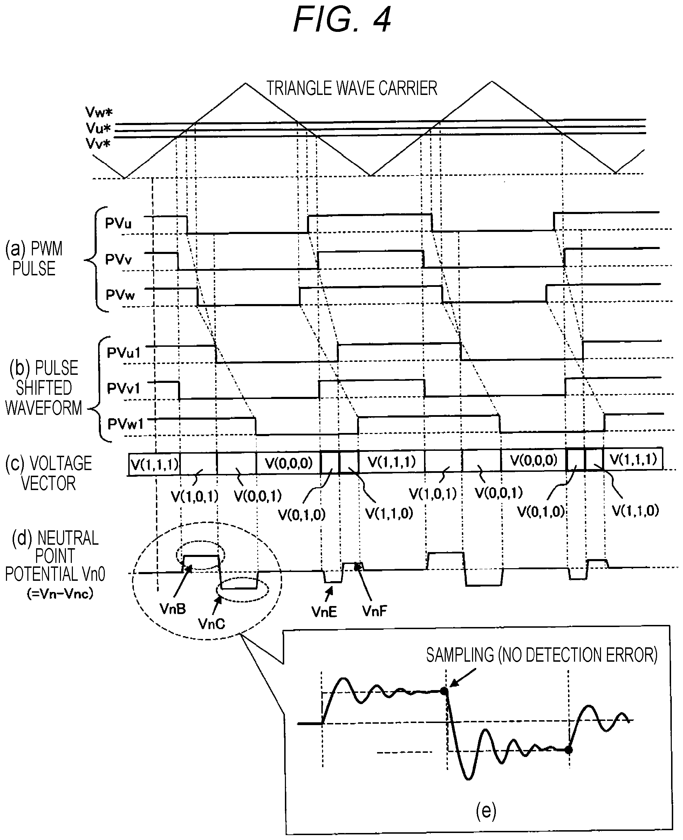

FIG. 4 is a figure illustrating actual pulse width modulation using triangle wave carrier, voltage at that occasion, and change of neutral point potential according to the present embodiment. In this case, the triangle wave carrier signal is a signal serving as a reference for converting the magnitudes of the three-phase voltage commands Vu*, Vv*, Vw* into pulse widths, and by comparing the magnitude relationship of the three-phase voltage commands Vu*, Vv*, Vw* and the triangle wave carrier, the PWM pulse can be generated. As can be seen from FIG. 4, it is understood that rise/fall of the PWM pulse of (a) of FIG. 4 is changed at a point where the magnitude relationship of the triangle wave carrier and the voltage commands Vu*, Vv*, Vw* is changed.

In PTL 4, the neutral point potential Vn0 is detected from the waveform of FIG. 4(a). In this case, as explained above, there is a problem in that detection error occurs as shown in FIG. 27.

In the present embodiment, in order to solve this problem, the pulse shift device 17 is introduced to correct the PWM pulses PVu, PVv, PVw. More specifically, a timer and a counter are prepared for each phase, and the pulse shift can be achieved by independently delaying the PWM waveform of each phase. The pulse-shifted waveforms are denoted as PVu1, PVv1, PVw1, respectively, shown in FIG. 4(b).

It is understood that with the shifting of the PWM pulse, the output periods of the voltage vectors V (1, 0, 1) and V (0.0.1) are increased. The setting of the amount of shift may be configured such that a lower limit value is set in the output period of each voltage vector (in this case, V (1, 0, 1) and V (0, 0, 1)), and the amount of shift may be equal to or more than the minimum value. As shown in FIG. 4(e), the lower limit value is such that, when it is set as a time width in which ringing of the neutral point voltage is sufficiently accommodated, the neutral point potential can be sampled without detection error.

As enlarged and shown in the voltage vector of FIG. 4(c), it is understood that the voltage vectors V (0, 1, 0) and V (1, 1, 0) which have not been used until then are output. The position estimation of the rotor is possible when at least two types of voltage vectors are applied, but since the types of the voltage vectors applied increases, the observed values of the neutral point potential can be increased, and therefore, the position detection can be done with a still higher degree of precision. It should be noted that a lower limit value may be provided for these new voltage vectors, and the output periods may be ensured.

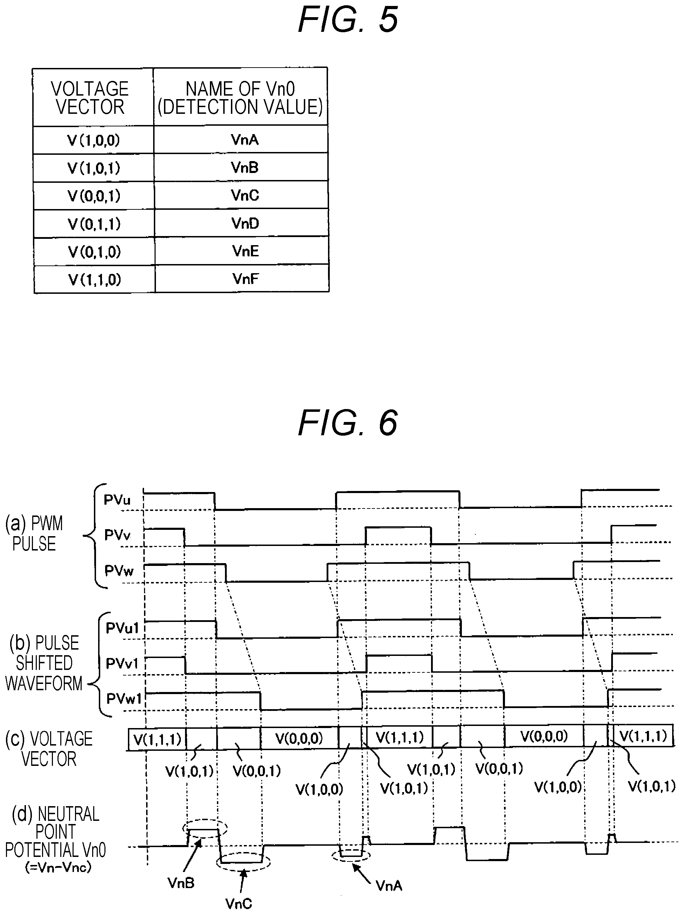

As described above, in the pulse width modulation operation of the inverter, times at which the switch state of each phase is switched from positive to negative and from negative to positive are set such that the two phase output voltage pulses are shifted in terms of time so that the phases are not close to each other within a predetermined time width (lower limit value). As explained later with reference to FIG. 6, only one phase output voltage pulse may also be shifted in terms of time. In these methods of pulse shifting, the output voltage pulse widths of the phases are not changed, and shifting in terms of time is achieved.

As a result of the pulse shift, while returning back from the first zero vector V (0, 0, 0) via the second zero vector V (1, 1, 1) back to the first zero vector, four types of voltage vectors are output, and this operation is greatly different from the method of PTL 4 shown in FIG. 27.

When switching operation of each phase is observed, the switching operation is as follows: after the pulses of the three phases are successively changed from the ON state to the OFF state, the pulses are changed from the OFF state to the ON state again, but it is understood that the order of change thereof is different before and after the pulse shift. More specifically, in the PWM waveform as shown in FIG. 4(a), the pulses are turned on in the order opposite to the order in which they are switched off as shown below.

PVv is OFF → PVu is OFF → PVw is OFF → PVw is ON → PVu is ON → PVv is ON

In contrast, it is characterized in that the pulse shifted waveforms are turned on in the order in which they are turned off as shown below.

PVv is OFF → PVu is OFF → PVw is OFF → PVv is ON → PVu is ON → PVw is ON

By the pulse shift, the pulse string as described above is generated, and the number of voltage vectors can be increased to four types.

In FIG. 5, the six types of voltage vectors other than zero, and the names of the neutral point potential observed at those occasions are defined. By performing the pulse shift as shown in FIG. 4, the neutral point potential is such that VnB and VnC can be reliably detected, and by further increasing the amount of pulse shift, the values of VnE and VnF can also be observed.

The effect of the pulse shift is summarized as follows.

First, the output periods of the voltage vectors V (1, 0, 1) and V (0, 0, 1) in which the neutral point potential can be detected are long, and therefore, as shown in FIG. 4(e), detection without error can be achieved while avoiding ringing. Secondly, as the voltage vector, new types of vectors V (0, 1, 0) and V (1, 1, 0) are applied, and the neutral point potential at this occasion is detected, and therefore, the rotor position information can be estimated with a still higher degree of precision. Thirdly, with the pulse shift, the average voltage of the phase voltages is not changed, and the number of switching is not increased, and therefore, the control performance of the motor is not affected, and the switching loss of the inverter is not increased.

Therefore, when the synchronous motor driving system according to the present embodiment is used, the present embodiment can achieve the position sensor-less driving at an extremely low speed, which was difficult in the past.

(Second embodiment)

Subsequently, the second embodiment of the present invention will be explained.

In the first embodiment, in order to detect Vn0, the pulse shift device 17 is introduced to shift the PWM pulse wave, whereby the output periods of the voltage vectors other than zero vector are increased, and two kinds of vector not included in the original PWM waveforms can be newly output, and therefore, the precision of the position estimation is improved.

In the example of the first embodiment, not only the original voltage vectors V (0, 0, 1), V (1, 0, 1) but also V (1, 1, 0), V (0, 1, 0) are newly applied. In this case, it is understood from FIG. 2(a) that V (0, 0, 1) and V (1, 1, 0) are vectors in direction opposite to V (1, 0, 1) and V (0, 1, 0), respectively. As described above, not only the vectors in the opposite direction but also voltage vector in a direction not included in PWM before the pulse shift, e.g., V (1, 0, 0) are added, this makes the effect of search of the rotor position, and further improves the precision of the rotor position information. For example, PTL 4 indicates a method of applying such voltage vector by forcible switch operation. According to the present embodiment, such application of voltage vector can be done without changing the number of switching.

FIG. 6 shows a result of pulse shift where not only the original voltage vectors V (0, 0, 1) and V (1, 0, 1) but also new V (1, 0, 0) are applied. The difference from the first embodiment lies in that only one phase is pulse shifted and the amount of shift thereof is different. The amount of shift required is different according to original PWM waveform condition (duty).

As described above, the control configuration is not changed but the amount of pulse shift is adjusted, and accordingly, the types of voltage vectors applied to the motor can be changed, and position estimation can be done with a still higher degree of precision.

(Third embodiment)

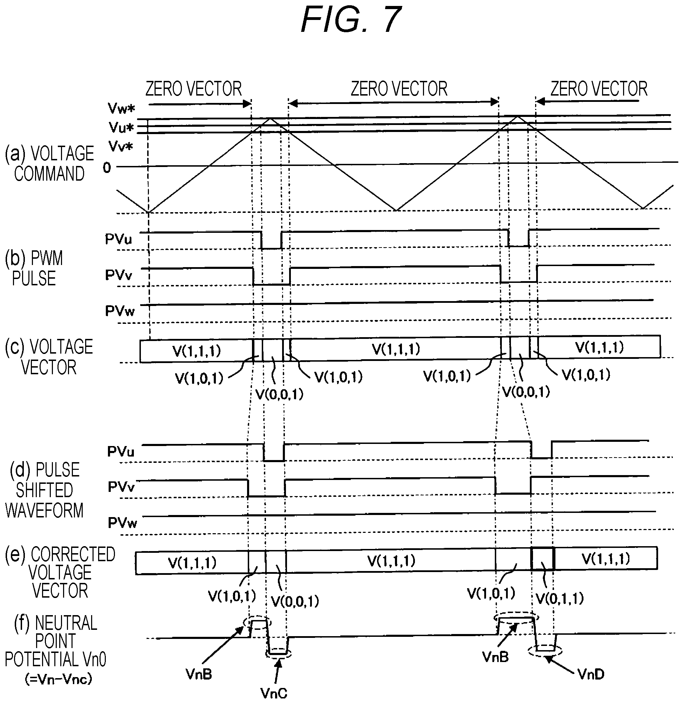

Subsequently, the third embodiment of the present invention will be explained with reference to FIG. 7.

The first and second embodiments showed that the pulse shift device 17 is introduced, so that the types of voltage vectors applied to the motor can be increased from two types to three or four types. In these embodiments, the switches of all of the three phases perform switching with the same frequency as the triangle wave carrier. In contrast, in the third embodiment, an example where the switching frequencies of the three phases are different (two-phase switching) will be explained.

FIG. 7(a) shows two-phase switching method using triangle wave carrier. Unlike FIG. 4, it is understood that the three-phase voltage commands Vu*, Vv*, Vw* are in contact with the upper side peak of the triangle wave carrier. In this example, Vw* which is the largest among the three-phase voltage commands matches the upper side peak value of the triangle wave carrier. In this manner, all the voltage commands are provided with the same bias value, so that the number of switching of a phase (in this condition, W-phase) can be reduced without changing the relationship of line voltages. Under the condition of FIG. 7, no switching is done at all for the W-phase, and the upper side switch (Swp of FIG. 1) continues to be at the ON state. Which phase stops switching is determined based on the magnitude relationship of the three-phase voltage commands, but the result is such that, as compared with the PWM method of FIG. 4, the number of switching is 1/3, and the switching loss of the inverter can be reduced.

The feature of the two phase switching lies in that the same one is repeatedly used as zero vector. In FIG. 7, during the second zero vector V (1, 1, 1), V (1, 0, 1) and V (0, 0, 1) are output, and further, pulse shift is performed, whereby new voltage vector V (0, 1, 1) enlarged and illustrated in the voltage vectors in (e) of FIG. 7 can be output. As a result, the types of detectable neutral point potentials can be increased to three types, including not only the VnB, VnC before the pulse shift but also VnD.

As described above, according to the present embodiment, the types of voltage vectors can be increased even in two-phase switching which has a low degree of inverter loss, and therefore, the effect of search of the rotor position can be achieved, and the position estimation precision can be improved with a highly efficient system.

(Fourth embodiment)

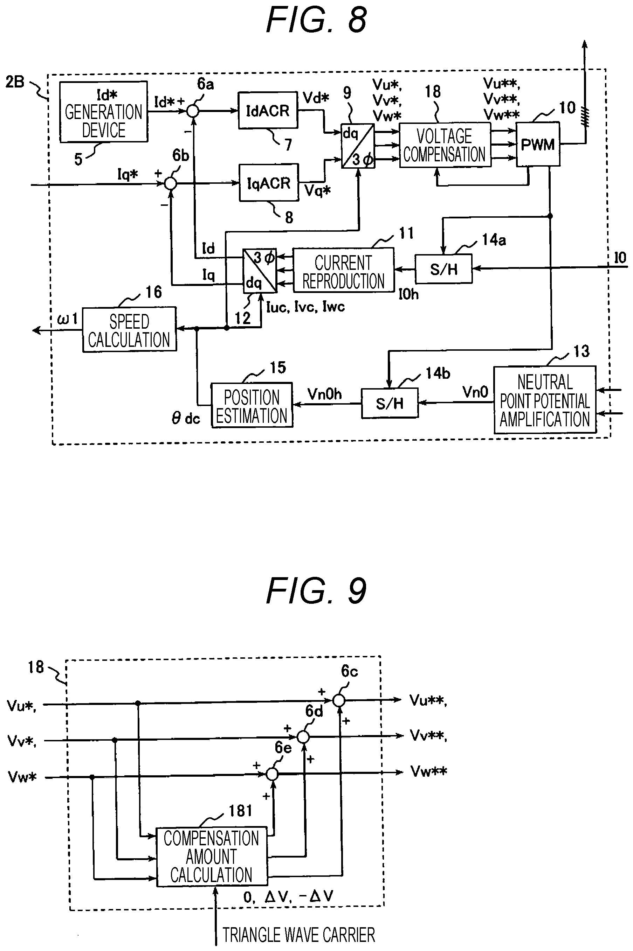

Subsequently, the fourth embodiment of the present invention will be explained with reference to FIGS. 8 to 10.

In any one of the first to third embodiments, the pulse shift device 17 shifts the phase of the PWM pulse waveform, thus increasing the period of voltage vectors other than zero, or increasing the types of voltage vectors.

The pulse shift can be easily achieved with hard logic such as a timer and a counter as explained above, but the same effect as this effect can also be achieved by correcting the three-phase voltage commands. In the present embodiment, this method will be explained.

FIG. 8 illustrates a configuration diagram of a control device 2B. In the figure, component numbers 5 to 16 are the same as those of the control device 2 (FIG. 1) of the first embodiment. The difference from FIG. 1 lies in that the pulse shift device 17 is eliminated, and a voltage compensation device 18 is added instead.

This voltage compensation device 18 performs compensation operation on the three-phase voltage commands Vu*, Vv*, Vw*, generates new voltage commands Vu**, Vv**, Vw**, and on the basis of these values, the PWM generation device 10 performs the PWM operation.

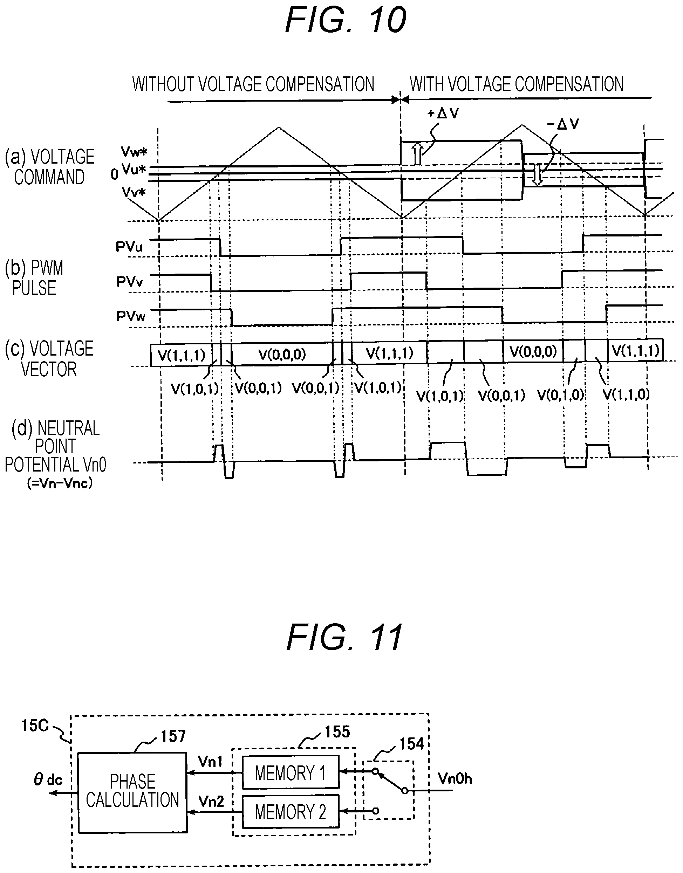

The configuration of the voltage compensation device 18 is shown in FIG. 9. As shown in the figure, the voltage compensation device 18 includes adding devices 6c to 6e and a compensation amount calculation device 181, and adds any one of compensation amounts 0, $\delta V$, $-\delta V$ to each of the original three-phase voltage commands. The voltage compensation is shown in FIG. 10. In a case where compensation is not done, narrow pulse width voltage vectors V (1, 0, 1) and V (0, 0, 1) are output, but by performing the voltage compensation, it is understood that the three-phase voltage commands are corrected, and not only the voltage vectors V (1, 0, 1) and V (0, 0, 1) but also V (0, 1, 0) and V (1, 1, 0) are newly output. The compensation amount of the voltage needs to be switched in half cycle of the triangle wave carrier, but by performing such compensation operation, completely the same effects as the first to third embodiments can be obtained.

According to the present embodiment, the pulse shift can be achieved by correcting the voltage commands, and this can be achieved using a generally-available micro computer having PWM function.

(Fifth embodiment)

Subsequently, the fifth embodiment of the present invention will be explained with reference to FIGS. 11 to 15.

In the first to the fourth embodiments, by correcting the PWM pulse, the types of the voltage vectors applied to the motor is increased, whereby the position detection precision is improved, and in these embodiments, the position estimation precision can be improved. However, an embodiment for still further improving the position detection precision will be newly explained as the fifth embodiment.

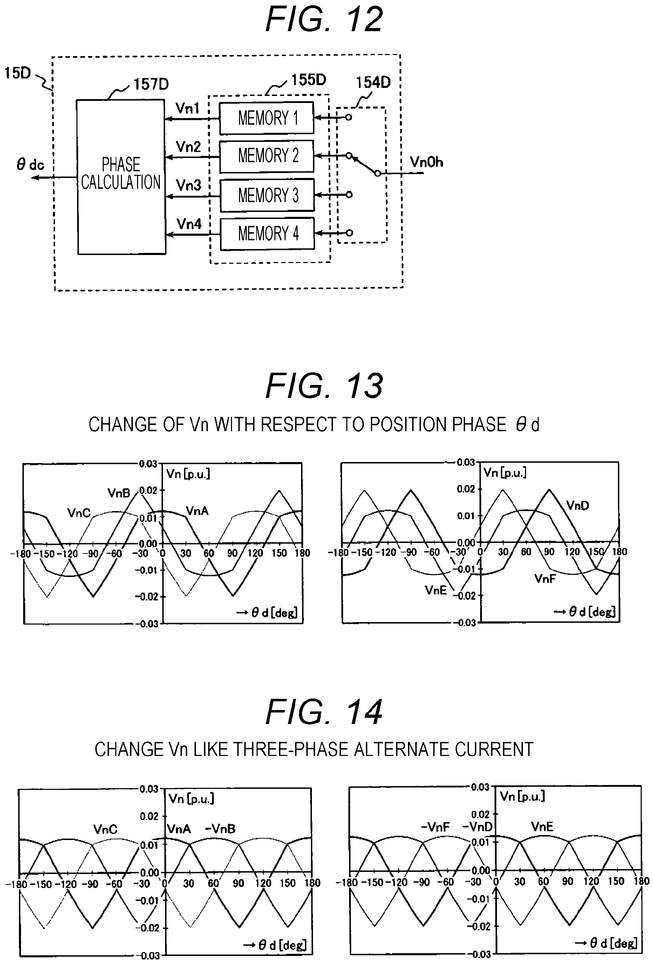

FIGS. 11 and 12 are configuration diagrams illustrating a position estimation device 15C and a position estimation device 15D. These position estimation devices are used instead of the position estimation device 15 in the control device 2 of FIG. 1 or in the control device 2B of FIG. 8, so that the fifth embodiment can be realized.

The position estimation device 15C of FIG. 11 includes a selection switch 154, a memory 155, and a phase calculation device 157. The position estimation device 15D of FIG. 12 includes a selection switch 154D, a memory 155D, and a position estimation device 157D. FIG. 11 and FIG. 12 are different in that two values of Vn0h which is a hold value of the neutral point potential are stored (FIG. 11), or four values thereof are stored (FIG. 12). In the position estimation, at least two values are needed, and therefore, FIG. 11 is the minimum required configuration. As explained in the above embodiments, the higher the number of neutral point potentials, the more the precision is improved. As shown in the above embodiments, when the voltage vectors are increased without changing the number of switching, three or four types of voltage vectors can be applied, and in this case, the neutral point potentials may be saved using the configuration as shown in FIG. 12. When three neutral point potentials are used, one of four memories in FIG. 12 must be used.

In the position estimation devices 15C, D, the switch 154 (154D) switches Vn0h which is a value obtained by quantizing the neutral point potential, and it is stored to the memory in such a manner that it can be found that the value is at a time of which voltage vector. On the basis of the values of the memory, the phase calculation device 157 (157D) calculates the rotor position $\theta d$ of the motor 4.

Subsequently, more specific calculation method of the phase calculation device 157 (157D) will be explained.

First, the relationship between the rotor position $\theta d$ and the neutral point potential Vn will be explained. The neutral point potential Vn occurs as the values of inductances Lu, Lv, Lw of the phases are changed by magnetic saturation due to the effect of magnet magnetic flux as shown in the expressions (1), (2). In this case, suppose that the inductance changes based on the following assumption.

$$Lu = L0 - Kf \cdot |\Phi u|$$

$$Lv = L0 - Kf \cdot |\Phi v|$$

$$Lw = L0 - Kf \cdot |\Phi w| \quad \cdots\cdots\cdots\cdots\cdots\cdots \quad (3)$$

In the above expression, L0: inductance during non-saturation, $\Phi u$, $\Phi v$, $\Phi w$: magnetic flux amount of each phase, Kf: coefficient. As shown in the expression (3), by representing the inductance, the inductance change according to the magnetic flux amount can be expressed. The magnetic flux amount of each phase can be expressed as follows.

$$\Phi u = \Phi m \cdot \cos(\theta d) + \Phi i \cdot \cos(\theta i)$$

$$\Phi v = \Phi m \cdot \cos(\theta d - 2\pi/3) + \Phi i \cdot \cos(\theta i - 2\pi/3)$$

$$\Phi w = \Phi m \cdot \cos(\theta d + 2\pi/3) + \Phi i \cdot \cos(\theta i + 2\pi/3) \quad \cdots$$

$$(4)$$

In the above expression, $\Phi m$: permanent magnet magnetic flux, $\theta d$: d axis phase, $\Phi i$: magnetic flux generated by current, $\theta i$: current phase. The expression (4) is substituted into the expression (3), and the change of the neutral point potential of each voltage vector is calculated as shown in the expressions (1), (2), then, what is shown in FIG. 13 is obtained. It should be noted that for the sake of simplicity, calculation is performed while $\Phi i$ in the expression (4) is deemed as being zero.

As shown in FIG. 13, it is understood that neutral point potentials VnA to VnF of the voltage vectors are changed depending on the position $\theta d$ of the rotor. With a neutral point potential of a voltage vector, it is impossible to identify the phase (rotor position) $\theta d$, but the phase can be identified when there are at least two. However, the neutral point potential changes with a cycle twice the cycle period of the rotor phase, and therefore, the estimation range of the position is within a range of $\pm 90$ degrees, but this is not avoidable due to the principle.

A method for identifying the rotor position $\theta d$ from such change of neutral point potential will be explained.

In FIG. 13, the neutral point potential exhibits complicated change for each voltage vector, but when the sign of VnB, VnD, VnF of the six types of neutral point potentials are reversed, the waveform as shown in FIG. 14 can be obtained. As can be seen from these waveforms, they are symmetrical three-phase alternate current waveforms. By making use of the feature of the symmetry of the three-phase, the rotor position is estimated.

Three-phase alternate current amount Xu, Xv, Xw may be subjected to three-phase to two-phase conversion ($\alpha\beta$ conversion). A three-phase to two-phase conversion expression can be expressed as follows.

$$Xa = (2/3) \cdot \{Xu - (1/2) \cdot Xv - (1/2) \cdot Xw\}$$

$$Xb = (2/3) \cdot \{(\sqrt{3}/2) \cdot Xv - (\sqrt{3}/2) \cdot Xw\}$$

$$\cdots\cdots\cdots\cdots\cdots (5)$$

For example, when three neutral point potentials VnA, VnB, VnC are obtained, the following expressions hold on the basis of FIG. 14,

$$Xu = VnA, \quad Xv = -VnB, \quad Xw = VnC \quad \cdots\cdots\cdots\cdots\cdots\cdots (6),$$

which are substituted into the expression (5) to derive Xa and Xb. Based on the result, the calculation value $\theta dc$ of $\theta d$ may be obtained as follows,

$$\theta dc = (1/2) \arctan(Xb/Xa) \quad \cdots\cdots\cdots\cdots\cdots (7).$$

It should be noted that "arctan" in the expression (7) means arc tangent.

When only two neutral point potentials are used, it may be possible to calculate one phase like the three-phase alternate current. For example, when VnA is not used in the expression (6), it may be possible to calculate as follows.

$$Xv = -VnB, \ Xw = VnC$$

$$Xu = -(Xv + Xw) = VnB - VnC \cdots\cdots\cdots\cdots (8)$$

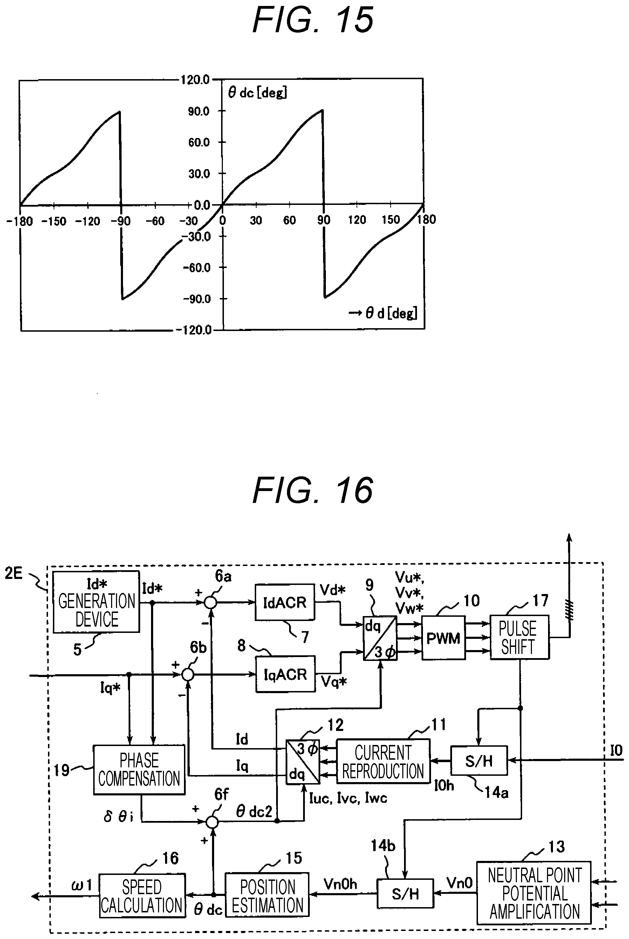

FIG. 15 is a result obtained by calculating the phase angle θdc using the expression (8) and the expression (7). It is understood that the rotor position θd can be calculated almost correctly. However, it is somewhat curved change, but when data table is prepared in advance, they can be corrected.

When four neutral point potentials (for example, four neutral point potentials, i.e., VnB, VnC, VnE, VnF) are used, it may be possible to calculate as follows.

$$Xv = (-VnB + VnE)/2$$

$$Xw = (VnC - VnF)/2$$

$$Xu = -(Xv + Xw) \cdots\cdots\cdots\cdots\cdots (9).$$

In the above expression, Xv and Xw are used to derive average values. The actual detection data are sampled at a point with the neutral point potential being a value at an instance, and are therefore, easily affected by detection error. In contrast, by employing average value of the values detected with different voltage vectors as described above, the effect of the detection error can be eliminated. Through averaging, the detection error of the neutral point potential can be reduced, and therefore, the detection precision is expected to improve.

The above calculation is done in the phase calculation device 157 (157D), and the rotor position is derived. As a result, the position detection can be achieved with a high degree of precision that could not be achieved in the past. It is not necessary to have table data for position estimation used in PTL 4, and under any PWM condition at any given instance, the estimation calculation of the rotor position can be performed.

(Sixth embodiment)

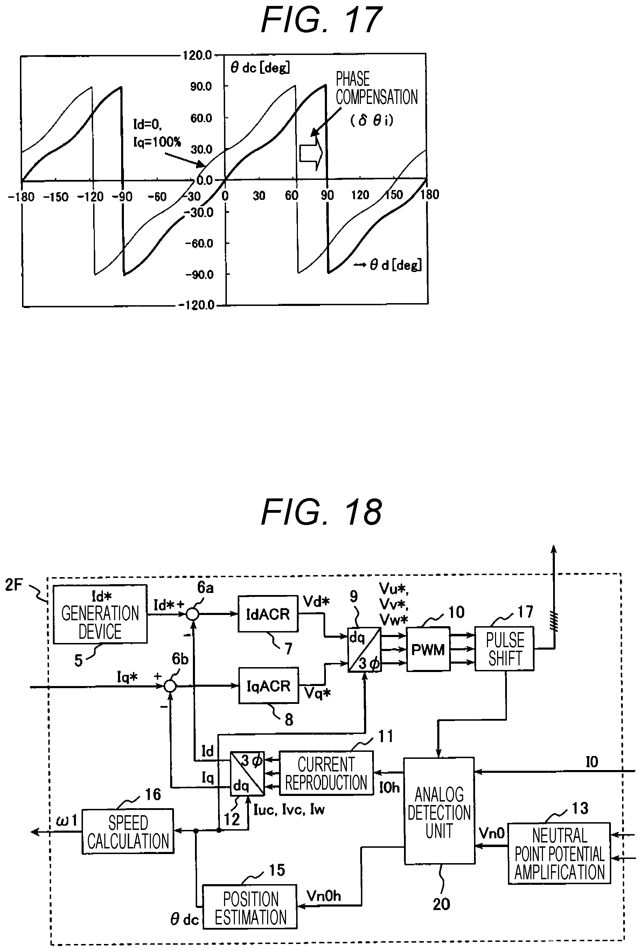

Subsequently, the sixth embodiment of the present invention will be explained with reference to FIGS. 16 and 17.

In the fifth embodiment, the details of the position estimation have been explained. In that case the magnetic flux Φi generated by the winding current as the magnetic flux in the motor is assumed to be zero (Φi is zero in the expression (4)), but in reality, when the current flows, Φi is generated, and each magnetic flux amount is changed. It is the present embodiment that copes with this issue.

In FIG. 16, a control device 2E is a control device of the present embodiment, and this control device 2E is used instead of, for example, the control device 2 of the embodiment of FIG. 1, so that the sixth embodiment can be realized.

In FIG. 16, those denoted with component numbers 5, 6a, 6b, 7 to 17 are the same as those of the control device 2 of FIG. 1. The control device 2E of FIG. 16 additionally includes an adding device 6f and a phase compensation device 19.

As described above, a current is passed through the motor, and the position estimation device 15 calculates θdc, then error occurs due to the current magnetic flux. In FIG. 17, what is denoted with a thin line is an example where phase calculation is performed under a condition where a current of Id = 0, Iq = 100% is passed. For example, when the actual θd is zero degrees, θdc is about 30 degrees. However, this deviation of the phase depends on the current value, and therefore, correction can be made when the phase compensation device 19 is introduced, and compensation phase δθi is prepared as data table in advance from the current commands Id*, Iq*. Alternatively, &θi may be calculated as a function of Id*, Iq*. The phase compensation device 19 outputs δθi, and this is added to θdc by the adding device 6f, whereby the deviation of the phase can be compensated. This result is shown as a thick line in FIG. 17.

As described above, the effect due to the current magnetic flux can be corrected by simple compensation blocks. It should be noted that not only the current command but also current detection value may be used for calculation of the phase compensation amount, or depending on the condition, torque command and torque detection value may also be used.

(Seventh embodiment)

Subsequently, the seventh embodiment of the present invention will be explained with reference to FIGS. 18 to 20.

In the above explanation about the embodiments, the estimation calculation method of the rotor position using the neutral point potential of the motor has been clarified. In an actual driving system for a synchronous motor, it is necessary to control the torque and the rotation speed of the motor, and therefore, it is necessary to have not only rotor position information but also current information about the motor.

The current information about the motor is generally obtained by performing detection using current sensors attached to a three-phase windings, but in order to reduce the size of the device, reduce the cost, and improve the reliability, there is a method for performing detection based on a one-shunt current detection device 35 (FIG. 1) provided in a direct current bus line without performing detection of the phase current.

In the one-shunt current detection device 35, phase current of the motor flows instantaneously, and the phase currents of the motor can be detected by programming sampling timing in advance. In such current detection, the application period of the voltage vector is important.

In the first to the sixth embodiments, the current detection and the neutral point potential detection for the position estimation are performed based on the assumption that the sample/hold circuit (AD transformation device) is independently provided for each of them, but depending on the controller for achieving the control device, the limitation of sample/hold exists and the number of AD transformation devices is limited in most cases.

In the present embodiment, hereinafter explained is a method, in which only one sample/hold circuit is provided (only one AD converter is provided), and the current detection and the neutral point potential detection are alternately performed.

In FIG. 18, a control device 2F is a control device of the present embodiment, and this control device 2F is used instead of, for example, the control device 2 of the embodiment of FIG. 1, so that the seventh embodiment can be realized.

In FIG. 18, those denoted with component numbers 5 to 13, 15 to 17 are the same as those of the control device 2 of FIG. 1. The control device 2F of FIG. 18 additionally includes an analog detection unit 20.

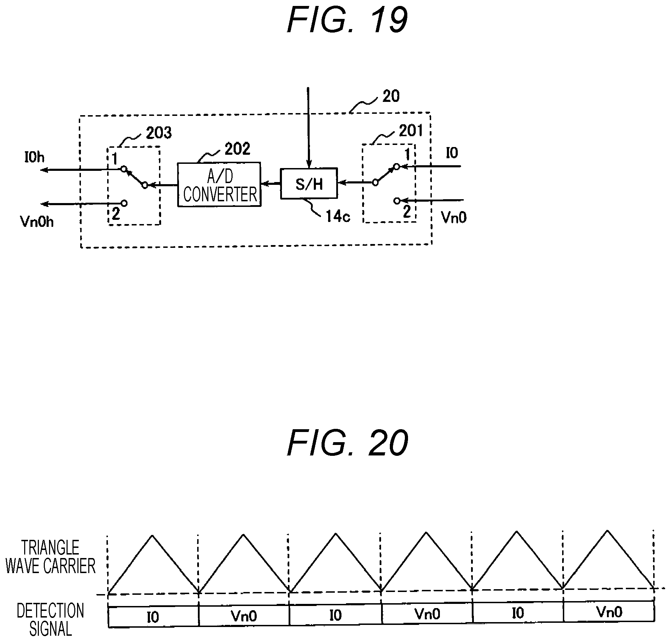

The configuration of the analog detection unit 20 is shown in FIG. 19. In the figure, the analog detection unit 20 includes an analog switch 201, a sample/hold circuit 14c, an AD converter 202, and a switch 203. As a micro computer for realizing the control device 2F is considered to be, for example, one having only one AD converter and only one sample/hold circuit.

The current 10 flowing through the one-shunt current detection device 35 and the neutral point potential Vn0 are input into the switch 201, and one of them is selected and sampled/held, and the AD converter 202 performs quantization. This result is output to the current reproduction device 11 or the position estimation device 15. The processing of the current 10 and the neutral point potential Vn0 is performed alternately in a time sequence. For example, as shown in FIG. 20, for each cycle of the triangle wave carrier, the detection of the current 10 and the detection of the neutral point potential Vn0 may be repeated alternately. In accordance with each setting response time of control system, the switching ratio thereof may be changed.

With a function of an actual micro computer, it is very difficult to detect analog values twice in half the cycle of the carrier with different timing. In such case, multiple sample/hold circuits and AD converters may be used together in some cases. Therefore, this would cause no problem as a method for using multiple sample/hold circuits and AD converters and alternately allocating them to the current detection and the position information detection.

As described above, when the seventh embodiment of the present invention is used, both of the current control and the position estimation can be achieved at a time with a micro computer having only limited functions, and it is possible to achieve a synchronous motor driving system with a high degree of precision at a low cost.

(Eighth embodiment)

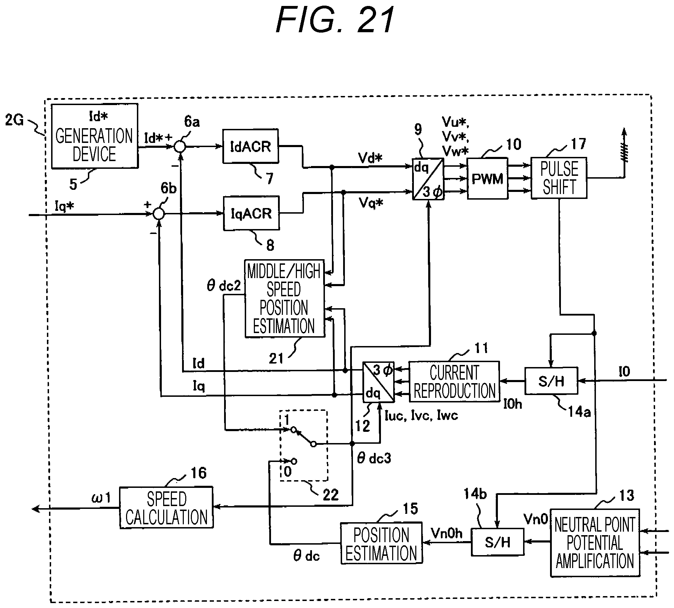

Subsequently, the eighth embodiment of the present invention will be explained with reference to FIG. 21.

In the present invention, the neutral point potential of the motor is used to perform the position estimation calculation, and this realizes position sensor-less driving at a speed as low as zero speed. The method using this neutral point potential can also be achieved at high speed driving in principle. However, as the speed increases, harmonic components may be generated in the neutral point potential, and this may cause position estimation error. The speed induced voltage of the neutral point potential may include much harmonics depending on the motor structure in some cases. In a case of such motor, position sensor-less driving with less estimation error can be achieved by introducing a method using a conventional speed induced voltage only in the high speed region. The present embodiment is to carry out this case.

In FIG. 21, a control device 2G is a control device of the present embodiment, and this control device 2G is used instead of, for example, the control device 2 of the embodiment of FIG. 1, so that the eighth embodiment can be realized.

In FIG. 21, those denoted with component numbers 5 to 17 are the same as those of the control device 2 of FIG. 1. The control device 2G of FIG. 21 newly includes a middle/high speed position estimation device 21 and an estimation phase selection switch 22.

The middle/high speed position estimation device 21 estimates and calculates rotor position θd from constant (inductance and winding resistance) of the motor 4 on the basis of Id, Iq which are current detection values and Vd*, Vq* which are voltage commands to the motor 4. Until today, many reports have been made about specific methods thereof, but any method can be applied. The output θdc2 from the middle/high speed position estimation device 21 and the phase θdc calculated from the neutral point potential are switched in accordance with the speed by the estimation phase selection switch 22. Both are switched by the switch as shown in the figure, and accordingly the position estimation algorithm can be changed in such a manner that the method based on the neutral point potential is used at a low speed and the method based on the induced voltage is used at a middle/high speed. Instead of switching using the switch as shown in the figure, it may be possible to gradually perform switching by weighting θdc and θdc2.

As described above, according to the present embodiment, over a wide range from low speed region to middle/high speed region, the rotor position can be detected with a high degree of precision, and stable synchronous electric motor driving system can be achieved.

(Ninth embodiment)

Subsequently, the ninth embodiment of the present invention will be explained.

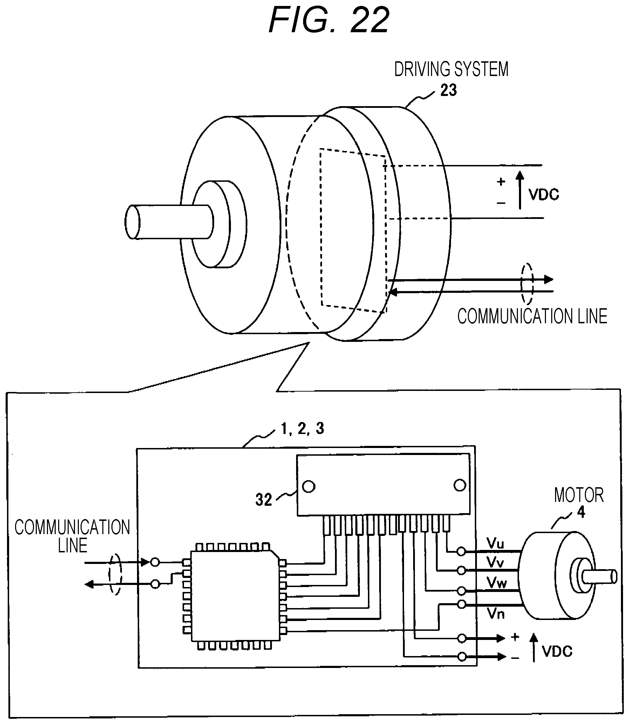

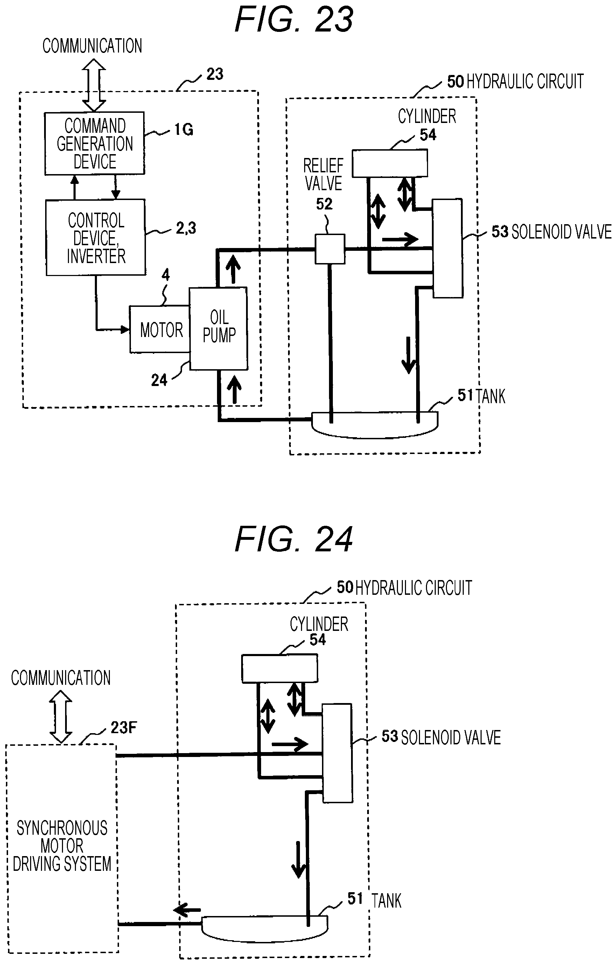

FIG. 22 is a practical diagram illustrating a driving system for a synchronous motor according to the present embodiment. In the figure, a synchronous motor driving system 23 is packaged as one system in the motor 4. By integrating all of them as above, the wires between the motor and the inverter can be eliminated. As shown in FIG. 23, the wires of the integrated driving system are only a power supply line to the inverter 3 and a communication line for, e.g., rotation speed command and returning operation state.

In the present invention, it is necessary to pull out the neutral point potential of the motor 4, but by integrating the motor and the driving circuit portion, the wiring of the neutral point potential becomes easy. Since the position sensorless can be achieved, the integrated system can be made in an extremely compact size and the size can be reduced.

(Tenth embodiment)

Subsequently, the tenth embodiment of the present invention will be explained.

FIG. 23 illustrates a hydraulic driving system, and is used for transmission hydraulic system and a brake hydraulic system in an automobile. In FIG. 23, the component number 23 is the synchronous motor driving system of FIG. 22, and an oil pump 24 is attached to the motor. The oil pump 24 controls the hydraulic pressure of a hydraulic circuit 50. The hydraulic circuit 50 includes a tank 51 for storing oil, a relief valve 52 for holding the hydraulic pressure at a setting value or less, a solenoid valve 53 for switching hydraulic circuit, and a cylinder 54 operating as a hydraulic actuator.

The oil pump 24 uses the synchronous motor driving system 23 to generate hydraulic pressure, and drives the cylinder 54 which is a hydraulic actuator. In the hydraulic circuit, the solenoid valve 53 switches the circuit, whereby the load of the oil pump 24 is changed, and load disturbance occurs in the synchronous motor driving system 23. In the hydraulic circuit, a load several times higher than normal state pressure may be applied, and the motor may stop. However, in the synchronous motor driving system of the present embodiment can estimate the rotor position even in a stopped state, and therefore no problem would be caused. It used to be difficult to apply conventional sensor-less in a region less than middle/high speed region, and therefore, it is essential for the relief valve 52 to relieve hydraulic pressure which is excessive load for the motor, but according to the present embodiment, as shown in FIG. 24, the relief valve 52 can be eliminated. More specifically, hydraulic pressure can be controlled without any relief valve which is mechanical protection device for avoiding excessive load applied to the motor.

(Eleventh embodiment)

Subsequently, the eleventh embodiment of the present invention will be explained.

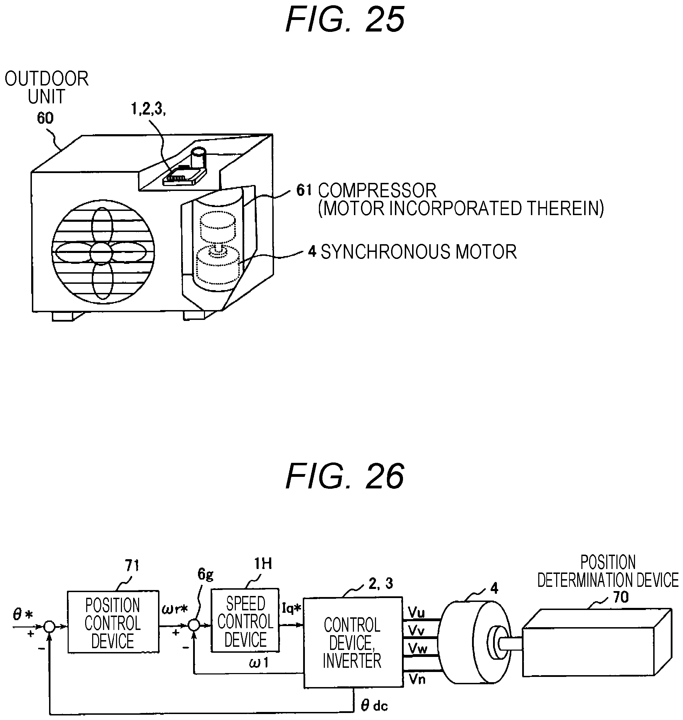

FIG. 25 illustrates an air conditioning system of a room air conditioner and a package air conditioner, and shows an outdoor unit 60. The outdoor unit 60 of the air conditioning system includes the driving system for the synchronous motor (component numbers 1 to 4) explained above, and also includes components such as a compressor 61 and a fan. Among them, the power source of the compressor is a motor which is incorporated into the inside of the compressor.

The air conditioning system is improving its efficiency year by year, and in normal state, it is necessary to drive at an extremely low speed to achieve power saving. In the conventional sensor-less driving, however, it is limited to the middle/high speed region, and it is difficult to drive at an extremely low speed. By using the synchronous motor driving system according to the present embodiment, the sinusoidal driving can be achieved at a speed as low as zero speed, and therefore, the efficiency of the air conditioner can be improved (power saving).

(Twelfth embodiment)

Finally, the twelfth embodiment of the present invention will be explained.

FIG. 26 illustrates a position determination device using a motor, and showing an entire block configuration thereof. In FIG. 26, the position determination device 70 is connected as a load of the motor 4. An Iq* generation device 1H functions as a speed control device in this case. The speed command ωr* is given as output of the position control device 71 which is a higher level control block. A subtraction device 6g performs comparison with the actual speed ωr, and Iq* is calculated so that the deviation thereof becomes zero. The position determination device 70 is, for example, a device using ball screw, and is adjusted by the position control device 71 so that the position is controlled to be at a predetermined position θ*. The position sensor is not attached to the position determination device 70, and the position estimation value θdc of the control device 2 is used as it is. Accordingly, it is not necessary to attach the position sensor to the position determination device, and the position control can be performed.

Hereinabove, the embodiments of the present invention have been explained in a specific manner, but the present invention is not limited to the above embodiments, and it is to be understood that the present invention can be changed in various manners without deviating from the gist thereof.

Examples will be explained. The present invention is based on the assumption that the three-phase winding connection point potential Vn of the permanent magnet motor 4 is detected. In the above explanation, because of the ease of detection of the neutral point potential, the virtual neutral point circuit 34 is introduced to generate a reference potential, and a difference from the three-phase winding connection point potential Vn is derived. However, when the connection point potential of the three-phase winding of the permanent magnet motor 4 can be detected, the reference potential can be anywhere. For example, a potential obtained by equally dividing the direct current power supply 31 may be adopted as a reference, or a ground side of the direct current power supply may be adopted as a reference potential. In such case, the same result can be obtained by subtracting an offset equivalent.

Industrial Applicability

As described above, the present invention is a technique for establishing a motor driving system without position sensor. Examples to which the motor can be applied include rotation speed control for a fan, a pump (hydraulic pump, water pump), a compressor, a spindle motor, an air conditioner heater device, a disk driver, and the motor can also be used for the purpose of position determination in a working machinery and industrial machinery.

Reference Signs List

1 ··· Iq* generation device, 2 ··· control device, 3 ··· inverter, 4 ··· permanent magnet motor, 5 ··· Id* generation device, 6a, 6b ··· subtraction device, 7 ··· d axis current control device, 8 ··· q axis current control device, 9 ··· dq inverse-transformation device, 10 ··· PWM generation device, 11 ··· current reproduction device, 12 ··· dq transformation device, 13 ··· neutral point potential amplification device, 14a, 14b ··· sample/hold circuit, 15 ··· position estimation device, 16 ··· speed calculation device, 17 ··· pulse shift device, 31 ··· direct current power supply, 32 ··· inverter main circuit, 33 ··· output pre-driver, 34 ··· virtual neutral point circuit, 35 ··· one-shunt current detection device

**Claims**

1.  A system for a synchronous motor, comprising an inverter (3, 32) configured to output a continuous alternate current and a three-phase synchronous motor (4) connected to the inverter, and a control device (2) configured to detect rotor position information on the basis of the neutral point potential (Vn) of the three-phase synchronous motor and control the inverter by outputting a pulse width modulation signal to the inverter,
    wherein the control device (2) is adapted to perform in pulse width modulation operation of the inverter switching operation from zero vector state in which switch state of each phase is all negative or all positive, and generate during a carrier cycle until the original zero vector state is attained, three or four types of switch states other than the zero vector by shifting timing of switch operation of each phase, and
    means for sampling the neutral point potentials adapted to sample the neutral point potentials in at least two types of switch states of the three or four types of switch states, and

means for estimating a rotor position of the three-phase synchronous motor adapted to estimate the rotor position on the basis of the sampling value from means for sampling,
**characterized in that**
the control device (2) is adapted to provide, in the pulse width modulation operation of the inverter, a period in which any one of the three phases is maintained in always positive or always negative state during a carrier cycle, to perform the pulse width modulation using the remaining two phases in this period, and to generated, by shifting timing of switch operation of these two phases, three types of switch states other than the zero vector, and wherein the means for sampling are adapted to sample the neutral point potentials in at least two types of switch states of the three types of switch states.

2. The system according to claim 1, wherein the switch operation of each phase within the carrier cycle changes from a zero vector state to a positive switch state phase by phase in order to change into a second zero vector state, and thereafter, changes from a phase in which a positive switch state is attained to a negative switch state in order, so that four types of switch states are generated in the carrier cycle, and again, the switch operation returns back to the original first zero vector.

3. The system according to claim 1 or 2, wherein a lower limit value is provided for periods of at least two types of switch states of the three or four types of switch states other than the zero vector as a switch state of the carrier cycle, and the lower limit value is set to a period equal to or more than a period in which initial variation is substantially converged when the neutral point potential changes.

4. The system according to any one of claims 1 to 3, wherein the method of the pulse width modulation is to calculate three-phase voltage commands applied to the three-phase synchronous motor, and performs pulse width modulation operation on the basis of the three-phase voltage commands, and when the pulse width modulation is performed, timing of switch operation of each pulse is shifted by adding a voltage compensation to the three-phase voltage command.

5. The system according to any one of claims 1 to 4, wherein at least two types of sampling values or more of the neutral point potentials are treated as three-phase alternate current signals, whereby the rotor position is estimated.

6. The system according to any one of claims 1 to 5, wherein means for detecting a direct current bus line current of the inverter is provided, and like the timing with which the neutral point potential is sampled, sampling of the direct current bus line current is performed such that it is sampled in a switch state other than the zero vector, and sampling of the neutral point potential and sampling of the direct current bus line current are alternately executed for each cycle or several cycles of the carrier, and with estimation of the rotor position, the direct current bus line current is detected, whereby the synchronous motor is controlled.

7. The system according to any one of claims 1 to 6, wherein in a low speed region including stopped state of the synchronous motor, rotor position is estimated based on sampling of the neutral point potential, and in a middle/high speed region of the synchronous motor, rotor position is estimated based on inductively generated voltage of the synchronous motor.

8. The system according to any one of claims 1 to 7, wherein the synchronous motor, the inverter, the control device are integrated, and a power supply line of the inverter and the control device and a signal line to the control device are extended to an outside.

9. A pump driving system using a synchronous motor having a water pump or hydraulic pump as a load comprising the system according to any one of claims 1 to 8.

10. A compressor driving system using a synchronous motor having a compressor as a load comprising the system according to any one of claims 1 to 8.

11. A position determination system comprising the system according to any one of claims 1 to 8, an object is moved and a position of the object is controlled.

12. The system according to any one of claims 1 to 11,
wherein in pulse width modulation operation of the inverter, output voltage pulses of one or two phases are shifted in terms of time so that timing with which switch state of each phase is switched from positive to negative and from negative to positive is configured not to be close to each other by a predetermined time width or less.

13. The system according to claim 12, wherein output voltage pulse of each phase is shifted in terms of time without changing output voltage pulse width of each phase.

14. The system according to claim 12 or 13, wherein output voltage pulses of two phases of the three phases are shifted in terms of time.

15. The system according to claim 12 or 13, wherein output voltage pulse of one phase of the three phases are shifted in terms of time.

16. The system according to any one of claims 12 to 15, wherein a PWM pulse generation unit is provided to generate PWM pulse by comparing a triangle wave carrier and a three-phase voltage command, and an output voltage pulse is shifted by applying bias, in an opposite direction, to the three-phase voltage command for each half cycle of the triangle wave carrier.

17. The system according to any one of the claims 1 to 16, wherein the inverter (3, 32) is configured to output a continuous sinusoidal alternate current.

18. A method for driving a synchronous motor by an inverter (3, 32) configured to output a continuous alternate current to a three-phase synchronous motor (4) connected to the inverter, and by a control device (2) that detects rotor position information on the basis of the neutral point potential (Vn) of the three-phase synchronous motor and controls the inverter and by outputting a pulse width modulation signal to the inverter,
wherein in pulse width modulation operation of the inverter, switching operation is performed from zero vector state in which switch state of each phase is all negative or all positive, and during a carrier cycle until the original zero vector state is attained, three or four types of switch states other than the zero vector are generated by shifting timing of switch operation of each phase, and the neutral point potentials in at least two types of switch states of the three or four types of switch states are sampled, and
wherein the control device is **characterized in** estimating a rotor position of the three-phase synchronous motor on the basis of the sampling value,
**characterized in that**
in the pulse width modulation operation of the inverter, a period is provided in which any one of the three phases is maintained in always positive or always negative state during a carrier cycle, and the pulse width modulation is performed using the remaining two phases in this period, and by shifting timing of switch operation of these two phases, three types of switch states other than the zero vector are generated, and the neutral point potentials in at least two types of switch states of the three types of switch states are sampled.

**Patentansprüche**

1. System für einen Synchronmotor, umfassend:

einen Wechselrichter (3, 32), der konfiguriert ist, um einen kontinuierlichen Wechselstrom auszugeben, sowie einen Dreiphasensynchronmotor (4), der mit dem Wechselrichter verbunden ist, und eine Steuervorrichtung (2), die derart konfiguriert ist, eine Rotorpositionsinformation auf der Basis des Neutralpunktpotentials (Vn) des Dreiphasensynchronmotors zu detektieren und den Wechselrichter durch Ausgabe eines Pulsbreitenmodulationssignals an den Wechselrichter zu steuern,
wobei die Steuervorrichtung (2) derart angepasst ist, im Pulsbreitenmodulationsbetrieb des Wechselrichters einen Schaltbetrieb von einem Nullvektorzustand, in dem der Schaltzustand jeder Phase insgesamt negativ oder insgesamt positiv ist, auszuführen und während eines Trägerzyklus, bis der ursprüngliche Nullvektorzustand erreicht ist, drei oder vier Typen von Schaltzuständen, die von dem Nullvektor verschieden sind, durch Verschieben der zeitlichen Steuerung des Schaltbetriebs jeder Phase zu erzeugen, und

ein Mittel zum Abtasten der Neutralpunktpotentiale, das derart angepasst ist, die Neutralpunktpotentiale in zumindest zwei Typen von Schaltzuständen der drei oder vier Typen von Schaltzuständen abzutasten, und ein Mittel zum Schätzen einer Rotorposition des Dreiphasensynchronmotors, das derart angepasst ist, die Rotorposition auf der Basis des Abtastwertes von einem Mittel zum Abtasten zu schätzen,
**dadurch gekennzeichnet, dass**

die Steuervorrichtung (2) derart angepasst ist, im Pulsbreitenmodulationsbetrieb des Wechselrichters eine Periode bereitzustellen, in der eine der drei Phasen in stets positivem oder stets negativem Zustand während eines Trägerzyklus beibehalten ist, um die Pulsbreitenmodulation unter Verwendung der verbleibenden beiden Phasen in dieser Periode auszuführen, und durch Verschieben der zeitlichen Steuerung des Schaltbetriebes dieser beiden Phasen drei Typen von Schaltzuständen, die von dem Nullvektor verschieden sind, zu erzeugen, und wobei das Mittel zum Abtasten derart angepasst ist, die Neutralpunktpotentiale in zumindest zwei Typen von Schaltzuständen der drei Typen von Schaltzuständen abzutasten.

2. System nach Anspruch 1, wobei sich der Schaltbetrieb jeder Phase in dem Trägerzyklus von einem Nullvektorzustand auf einen positiven Schaltzustand Phase um Phase ändert, um in einen zweiten Nullvektorzustand zu wechseln, und anschließend von einer Phase, in der ein positiver Schaltzustand erreicht ist, zu einem negativen Schaltzustand wechselt, so dass vier Typen von Schaltzuständen in dem Trägerzyklus erzeugt werden, und wiederum der Schaltbetrieb zurück zu dem ursprünglichen ersten Nullvektor zurückkehrt.

3. System nach einem der Ansprüche 1 oder 2, wobei ein unterer Grenzwert für Perioden von zumindest zwei Typen von Schaltzuständen der drei oder vier Typen von Schaltzuständen, die von dem Nullvektor verschieden sind, als ein Schaltzustand des Trägerzyklus vorgesehen ist, und der untere Grenzwert auf eine Periode gleich oder größer als einer Periode gesetzt ist, in der eine anfängliche Variation im Wesentlichen konvergiert, wenn sich das Neutralpunktpotential ändert.

4. System nach einem der Ansprüche 1 bis 3, wobei das Verfahren der Pulsbreitenmodulation dazu dient, Dreiphasenspannungsanweisungen, die an den Dreiphasensynchronmotor angelegt werden, zu berechnen, und einen Pulsbreitenmodulationsbetrieb auf Basis der Dreiphasenspannungsanweisungen ausführt, und, wenn die Pulsbreitenmodulation ausgeführt wird, eine zeitliche Steuerung des Schaltbetriebes jedes Pulses durch Addition einer Spannungskompensation zu der Dreiphasenspannungsanweisung verschoben wird.

5. System nach einem der Ansprüche 1 bis 4, wobei zumindest zwei Typen von Abtastwerten oder mehr der Neutralpunktpotentiale als Dreiphasenwechselstromsignale behandelt werden, wodurch die Rotorposition geschätzt wird.

6. System nach einem der Ansprüche 1 bis 5, wobei ein Mittel zum Detektieren eines Gleichstrombusleitungsstromes des Wechselrichters vorgesehen ist und ähnlich der zeitlichen Steuerung, mit der das Neutralpunktpotential abgetastet wird, eine Abtastung des Gleichstrombusleitungsstromes so ausgeführt wird, dass er in einem Schaltzustand, der von dem Nullvektor verschieden ist, abgetastet wird, und ein Abtasten des Neutralpunktpotentials und ein Abtasten des Gleichstrombusleistungsstromes abwechselnd für jeden Zyklus oder mehrere Zyklen des Trägers ausgeführt werden, und mit einer Schätzung der Rotorposition der Gleichstrombusleitungsstrom detektiert wird, wodurch der Synchronmotor gesteuert ist.

7. System nach einem der Ansprüche 1 bis 6, wobei in einem Niedrigdrehzahlbereich, einschließlich einem gestoppten Zustand des Synchronmotors, eine Rotorposition basierend auf einer Abtastung des Neutralpunktpotentials geschätzt wird, und in einem Bereich mit mittlerer/hoher Drehzahl des Synchronmotors eine Rotorposition basierend auf induktiv erzeugter Spannung des Synchronmotors geschätzt wird.

8. System nach einem der Ansprüche 1 bis 7, wobei der Synchronmotor, der Wechselrichter, die Steuervorrichtung integriert sind und die Energieversorgungsleitung des Wechselrichters und der Steuervorrichtung und eine Signalleitung zu der Steuervorrichtung zu einer Außenseite verlängert sind.

9. Pumpenantriebssystem unter Verwendung eines Synchronmotors, das eine Wasserpumpe oder Hydraulikpumpe als eine Last aufweist, die das System nach einem der Ansprüche 1 bis 8 umfasst.

10. Verdichterantriebssystem unter Verwendung eines Synchronmotors, das einen Verdichter als eine Last aufweist, die das System nach einem der Ansprüche 1 bis 8 umfasst.

11. Positionsbestimmungssystem, das das System nach einem der Ansprüche 1 bis 8 umfasst, wobei ein Objekt bewegt und eine Position des Objektes gesteuert ist.

12. System nach einem der Ansprüche 1 bis 11, wobei im Pulsbreitenmodulationsbetrieb des Wechselrichters Ausgangsspannungspulse einer oder zwei Phasen in Bezug auf die Zeit so verschoben werden, dass eine zeitliche Steuerung, mit der der Schaltzustand jeder Phase von positiv nach negativ und von negativ auf positiv geschaltet wird, so konfiguriert ist, dass sie nicht um eine vorbestimmte Zeitbreite oder weniger nahe beieinander liegen.

13. System nach Anspruch 12, wobei der Ausgangsspannungspuls jeder Phase in Bezug auf die Zeit ohne Änderung der Ausgangsspannungspulsbreite jeder Phase verschoben ist.

14. System nach einem der Ansprüche 12 oder 13, wobei Ausgangsspannungspulse von zwei Phasen der drei Phasen in Bezug auf die Zeit verschoben sind.

15. System nach einem der Ansprüche 12 oder 13, wobei der Ausgangsspannungspuls einer Phase der drei Phasen in Bezug auf die Zeit verschoben ist.

16. System nach einem der Ansprüche 12 bis 15, wobei eine PWM-Pulserzeugungseinheit vorgesehen ist, um den PWM-Puls durch Vergleichen eines Dreieckwellenträgers und einer Dreiphasenspannungsanweisung zu erzeugen, und ein Ausgangsspannungspuls durch Anlegen einer Vorspannung in einer der Dreiphasenspannungsanweisung entgegengesetzten Richtung für jeden Halbzyklus des Dreieckwellenträgers verschoben ist.

17. System nach einem der Ansprüche 1 bis 16, wobei der Wechselrichter (3, 32) derart konfiguriert ist, einen kontinuierlichen sinusförmigen Wechselstrom auszugeben.

18. Verfahren zum Betrieb eines Synchronmotors durch einen Wechselrichter (3, 32), der derart konfiguriert ist, einen kontinuierlichen Wechselstrom an einen Dreiphasensynchronmotor (4) auszugeben, der mit dem Wechselrichter verbunden ist, und durch eine Steuervorrichtung (32), die eine Rotorpositionsinformation auf Basis des Neutralpunktpotentials (Vn) des Dreiphasensynchronmotors detektiert und den Wechselrichter steuert, und durch Ausgabe eines Pulsbreitenmodulationssignals an den Wechselrichter,

wobei im Pulsbreitenmodulationsbetrieb des Wechselrichters ein Schaltbetrieb von einem Nullvektorzustand, in welchem ein Schaltzustand jeder Phase insgesamt negativ oder insgesamt positiv ist, und während eines Trägerzyklus ausgeführt wird, bis der ursprüngliche Nullvektorzustand erreicht ist, drei oder vier der Schaltzustände, die von dem Nullvektor verschieden sind, durch Verschieben der zeitlichen Steuerung des Schaltbetriebs jeder Phase erzeugt werden, und die Neutralpunktpotentiale in zumindest zwei Typen von Schaltzuständen der drei oder vier Typen von Schaltzuständen abgetastet werden, und
wobei die Steuervorrichtung durch Schätzen einer Rotorposition des Dreiphasensynchronmotors auf Basis des Abtastwertes **gekennzeichnet ist,**
**dadurch** gekennzeichnet, dass
in dem Pulsbreitenmodulationsbetrieb des Wechselrichters eine Periode vorgesehen ist, innerhalb der eine der drei Phasen in stets positivem oder stets negativem Zustand während eines Trägerzyklus beibehalten wird, und die Pulsbreitenmodulation unter Verwendung der verbleibenden beiden Phasen in dieser Periode ausgeführt wird, und durch Verschieben der zeitlichen Steuerung des Schaltbetriebes dieser beiden Phasen drei Typen von Schaltzuständen, die von dem Nullvektor verschieden sind, erzeugt werden, und die Neutralpunktpotentiale in zumindest zwei Typen von Schaltzuständen der drei Typen von Schaltzuständen abgetastet werden.

**Revendications**

1. Système pour un moteur synchrone, comprenant
un onduleur (3, 32) configuré pour délivrer un courant alternatif continu et un moteur synchrone triphasé (4) connecté à l'onduleur, ainsi qu'un dispositif de commande (2) configuré pour détecter des informations de position de rotor sur la base du potentiel de point neutre (Vn) du moteur synchrone triphasé et pour commander l'onduleur en délivrant un signal de modulation de largeur d'impulsion à l'onduleur,
dans lequel le dispositif de commande (2) est adapté à effectuer, dans le fonctionnement en modulation de largeur d'impulsion de l'onduleur, l'opération de commutation à partir d'un état de vecteur nul dans lequel l'état de commutation de chaque phase est tout négatif ou tout positif, et générer pendant un cycle de porteuse, jusqu'à ce que l'état de vecteur nul d'origine soit atteint, trois ou quatre types d'états de commutation autres que le vecteur nul en décalant le timing de l'opération de commutation de chaque phase, et
des moyens pour échantillonner les potentiels de point neutre, adaptés à échantillonner les potentiels de point neutre dans au moins deux types d'états de commutation des trois ou quatre types d'états de commutation, et
des moyens pour estimer une position de rotor du moteur synchrone triphasé, adaptés à estimer la position de rotor sur la base de la valeur d'échantillonnage provenant des moyens pour échantillonner,

**caractérisé en ce que**

le dispositif de commande (2) est adapté à fournir, dans le fonctionnement en modulation de largeur d'impulsion de l'onduleur, une période dans laquelle l'une quelconque des trois phases est maintenue dans un état toujours positif ou toujours négatif pendant un cycle de porteuse, à effectuer la modulation de largeur d'impulsion en utilisant les deux phases restantes dans cette période et à générer, en décalant le timing de l'opération de commutation de ces deux phases, trois types d'états de commutation autres que le vecteur nul,

et dans lequel les moyens pour échantillonner sont adaptés à échantillonner les potentiels de point neutre dans au moins deux types d'états de commutation des trois types d'états de commutation.

2. Système selon la revendication 1, dans lequel l'opération de commutation de chaque phase dans le cycle de porteuse passe d'un état de vecteur nul à un état de commutation positif phase par phase afin de passer à un deuxième état de vecteur nul, puis passe d'une phase dans laquelle un état de commutation positif est atteint à un état de commutation négatif dans l'ordre, de sorte que quatre types d'états de commutation sont générés dans le cycle de porteuse et, à nouveau, l'opération de commutation revient au premier vecteur nul d'origine.

3. Système selon la revendication 1 ou 2, dans lequel une valeur limite inférieure est prévue pour des périodes d'au moins deux types d'états de commutation des trois ou quatre types d'états de commutation autres que le vecteur nul en tant qu'état de commutation du cycle de porteuse, et la valeur limite inférieure est fixée à une période égale ou supérieure à une période vers laquelle une variation initiale converge sensiblement lorsque le potentiel de point neutre change.

4. Système selon l'une quelconque des revendications 1 à 3, dans lequel la méthode de modulation de largeur d'impulsion consiste à calculer des consignes de tension triphasée appliquées au moteur synchrone triphasé et à effectuer une opération de modulation de largeur d'impulsion sur la base des consignes de tension triphasée, et lorsque la modulation de largeur d'impulsion est effectuée, le timing de l'opération de commutation de chaque impulsion est décalé en ajoutant une compensation de tension à la consigne de tension triphasée.

5. Système selon l'une quelconque des revendications 1 à 4, dans lequel au moins deux types de valeurs d'échantillonnage ou plus des potentiels de point neutre sont traités comme des signaux de courant alternatif triphasé, ce qui permet d'estimer la position du rotor.

6. Système selon l'une quelconque des revendications 1 à 5, dans lequel des moyens pour détecter un courant de ligne de bus à courant continu de l'onduleur sont prévus, et comme le timing avec lequel le potentiel de point neutre est échantillonné, l'échantillonnage du courant de ligne de bus à courant continu est effectué de telle sorte qu'il est échantillonné dans un état de commutation autre que le vecteur nul, et l'échantillonnage du potentiel de point neutre et l'échantillonnage du courant de ligne de bus à courant continu sont exécutés alternativement pour chaque cycle ou plusieurs cycles de la porteuse, et avec l'estimation de la position du rotor, le courant de ligne de bus à courant continu est détecté, ce qui permet de commander le moteur synchrone.

7. Système selon l'une quelconque des revendications 1 à 6, dans lequel, dans une région à faible vitesse incluant l'état arrêté du moteur synchrone, la position du rotor est estimée sur la base de l'échantillonnage du potentiel de point neutre et, dans une région à vitesse moyenne/élevée du moteur synchrone, la position du rotor est estimée sur la base de la tension du moteur synchrone générée par induction.

8. Système selon l'une quelconque des revendications au point 7, dans lequel le moteur synchrone, l'onduleur, le dispositif de commande sont intégrés, et une ligne d'alimentation électrique de l'onduleur et du dispositif de commande et une ligne de signalisation vers le dispositif de commande sont prolongées vers l'extérieur.

9. Système d'entraînement de pompe utilisant un moteur synchrone ayant une pompe à eau ou une pompe hydraulique comme charge, comprenant le système selon l'une quelconque des revendications à 8.

10. Système d'entraînement de compresseur utilisant un moteur synchrone ayant un compresseur comme charge, comprenant le système selon l'une quelconque des revendications 1 à 8.

11. Système de détermination de position comprenant le système selon l'une quelconque des revendications 1 à 8, dans lequel un objet est déplacé et une position de l'objet est commandée.

12. Système selon l'une quelconque des revendications 1 à 11,

dans lequel, dans le fonctionnement en modulation de largeur d'impulsion de l'onduleur, les impulsions de tension de sortie d'une ou de deux phases sont décalées dans le temps, de sorte que le timing avec lequel l'état de commutation de chaque phase est commuté de positif à négatif et de négatif à positif est configuré pour qu'elles ne soient pas proches l'une de l'autre d'une largeur de temps prédéterminée ou moins.

13. Système selon la revendication 12, dans lequel l'impulsion de tension de sortie de chaque phase est décalée dans le temps sans changer la largeur de l'impulsion de tension de sortie de chaque phase.

14. Système selon la revendication 12 ou 13, dans lequel les impulsions de tension de sortie de deux phases des trois phases sont décalées dans le temps.

15. Système selon la revendication 12 ou 13, dans lequel les impulsions de tension de sortie d'une phase des trois phases sont décalées dans le temps.

16. Système selon l'une quelconque des revendications 12 à 15, dans lequel une unité de génération d'impulsion PWM est prévue pour générer une impulsion PWM en comparant une porteuse à onde triangulaire et une consigne de tension triphasée, et une impulsion de tension de sortie est décalée en appliquant une polarisation, dans un sens opposé, à la consigne de tension triphasée pour chaque demi-cycle de la porteuse à onde triangulaire.

17. Système selon l'une quelconque des revendications 1 à 16, dans lequel l'onduleur (3, 32) est configuré pour délivrer un courant alternatif sinusoïdal continu.

18. Procédé pour entraîner un moteur synchrone par un onduleur (3, 32) configuré pour délivrer un courant alternatif continu à un moteur synchrone triphasé (4) connecté à l'onduleur, ainsi que par un dispositif de commande (2) qui détecte des informations de position de rotor sur la base du potentiel de point neutre (Vn) du moteur synchrone triphasé et qui commande l'onduleur en délivrant un signal de modulation de largeur d'impulsion à l'onduleur, dans lequel, dans le fonctionnement en modulation de largeur d'impulsion de l'onduleur, l'opération de commutation est effectuée à partir de l'état de vecteur nul dans lequel l'état de commutation de chaque phase est tout négatif ou tout positif, et pendant un cycle de porteuse, jusqu'à ce que l'état de vecteur nul d'origine soit atteint, trois ou quatre types d'états de commutation autres que le vecteur nul sont générés en décalant le timing de l'opération de commutation de chaque phase, et les potentiels de point neutre dans au moins deux types d'états de commutation des trois ou quatre types d'états de commutation sont échantillonnés, et dans lequel le dispositif de commande est **caractérisé par** le fait d'estimer une position de rotor du moteur synchrone triphasé sur la base de la valeur d'échantillonnage, **caractérisé en ce que**, dans le fonctionnement en modulation de largeur d'impulsion de l'onduleur, il est prévu une période dans laquelle l'une quelconque des trois phases est maintenue dans un état toujours positif ou toujours négatif pendant un cycle de porteuse, et la modulation de largeur d'impulsion est effectuée en utilisant les deux phases restantes dans cette période, et en décalant le timing de l'opération de commutation de ces deux phases, trois types d'états de commutation autres que le vecteur nul sont générés, et les potentiels de point neutre dans au moins deux types d'états de commutation des trois types d'états de commutation sont échantillonnés.

# FIG. 1

# FIG. 2

(a) INVERTER OUTPUT VOLTAGE

(b) $\theta$ d AND VOLTAGE VECTOR

# FIG. 3

(a) V(1,0,1)

$$Vn0 = \{ \frac{Lv}{Lu//Lw + Lv} - (2/3) \} \times VDC$$

(b) V(0,0,1)

$$Vn0 = \{ \frac{Lu//Lv}{Lu//Lv + Lw} - (1/3) \} \times VDC$$

# FIG. 4

TRIANGLE WAVE CARRIER

Vw*
Vu*
Vv*

(a) PWM PULSE
PVu
PVv
PVw

(b) PULSE SHIFTED WAVEFORM
PVu1
PVv1
PVw1

(c) VOLTAGE VECTOR
V(1,1,1) V(0,0,0) V(1,1,1) V(0,0,0) V(1,1,1)
V(1,0,1) V(0,0,1) V(1,0,1) V(0,0,1)
V(0,1,0) V(1,1,0) V(0,1,0) V(1,1,0)

(d) NEUTRAL POINT POTENTIAL Vn0 (=Vn−Vnc)
VnB VnC VnE VnF

SAMPLING (NO DETECTION ERROR)

(e)

# FIG. 5

| VOLTAGE VECTOR | NAME OF Vn0 (DETECTION VALUE) |
|---|---|
| V (1,0,0) | VnA |
| V (1,0,1) | VnB |
| V (0,0,1) | VnC |
| V (0,1,1) | VnD |
| V (0,1,0) | VnE |
| V (1,1,0) | VnF |

# FIG. 6

(a) PWM PULSE
{ PVu
PVv
PVw }

(b) PULSE SHIFTED WAVEFORM
{ PVu1
PVv1
PVw1 }

(c) VOLTAGE VECTOR

| V(1,1,1) | | V(0,0,0) | | V(1,1,1) | | | V(0,0,0) | | V(1,1,1) |

V(1,0,1)   V(0,0,1)        V(1,0,1)  V(0,0,1)

V(1,0,0)   V(1,0,1)   V(1,0,0)   V(1,0,1)

(d) NEUTRAL POINT POTENTIAL Vn0 (=Vn-Vnc)

VnB

VnC

VnA

# FIG. 7

(a) VOLTAGE COMMAND

(b) PWM PULSE

(c) VOLTAGE VECTOR

(d) PULSE SHIFTED WAVEFORM

(e) CORRECTED VOLTAGE VECTOR

(f) NEUTRAL POINT POTENTIAL Vn0 (=Vn−Vnc)

## FIG. 8

## FIG. 9

# FIG. 10

WITHOUT VOLTAGE COMPENSATION | WITH VOLTAGE COMPENSATION

$+\Delta V$ | $-\Delta V$

(a) VOLTAGE COMMAND

Vw*
0 Vu*
Vv*

(b) PWM PULSE

PVu

PVv

PVw

(c) VOLTAGE VECTOR

| V(1,1,1) | V(0,0,0) | V(1,1,1) | V(0,0,0) | V(1,1,1) |

V(1,0,1)  V(0,0,1)  V(0,0,1)  V(1,0,1)  V(1,0,1)  V(0,0,1)  V(0,1,0)  V(1,1,0)

(d) NEUTRAL POINT POTENTIAL Vn0
(=Vn−Vnc)

# FIG. 11

15C

157 PHASE CALCULATION

$\theta$ dc

Vn1

Vn2

155

MEMORY 1

MEMORY 2

154

Vn0h

# FIG. 12

PHASE
CALCULATION

$\theta$ dc

MEMORY 1 — Vn1
MEMORY 2 — Vn2
MEMORY 3 — Vn3
MEMORY 4 — Vn4

VnOh

15D
157D
155D
154D

# FIG. 13

## CHANGE OF Vn WITH RESPECT TO POSITION PHASE $\theta$ d

# FIG. 14

## CHANGE Vn LIKE THREE-PHASE ALTERNATE CURRENT

# FIG. 15

# FIG. 16

# FIG. 17

# FIG. 18

# FIG. 19

# FIG. 20

# FIG. 21

# FIG. 22

## FIG. 23

COMMUNICATION

23

50 HYDRAULIC CIRCUIT

CYLINDER

COMMAND
GENERATION
DEVICE — 1G

54

RELIEF
VALVE

CONTROL
DEVICE,
INVERTER — 2,3

52

53 SOLENOID VALVE

4

MOTOR | OIL
PUMP

51 TANK

24

## FIG. 24

50 HYDRAULIC CIRCUIT

CYLINDER

54

COMMUNICATION

23F

53 SOLENOID VALVE

SYNCHRONOUS
MOTOR
DRIVING SYSTEM

51 TANK

## FIG. 25

OUTDOOR
UNIT
60

1,2,3,

61 COMPRESSOR
(MOTOR INCORPORATED THEREIN)

4 SYNCHRONOUS MOTOR

## FIG. 26

POSITION
DETERMINATION DEVICE
70

θ* → POSITION CONTROL DEVICE (71) → ωr* → SPEED CONTROL DEVICE (1H) → Iq* → CONTROL DEVICE, INVERTER (2, 3) → Vu, Vv, Vw, Vn → (4)

6g

ω1

θdc

# FIG. 27

FIRST ZERO VECTOR  SECOND ZERO VECTOR  FIRST ZERO VECTOR

(a) VOLTAGE COMMAND

TRIANGLE WAVE CARRIER

Vw*
0  Vu*
Vv*

(b) PWM PULSE

PVu

PVv

PVw

(c) VOLTAGE VECTOR

V(1,1,1)  V(0,0,0)  V(1,1,1)  V(0,0,0)  V(1,1,1)

V(1,0,1)  V(0,0,1)  V(0,0,1)  V(1,0,1)  V(1,0,1)  V(0,0,1)  V(0,0,1)  V(1,0,1)

(d) NEUTRAL POINT POTENTIAL Vn0 (=Vn−Vnc)

* CHANGE OF NEUTRAL POINT POTENTIAL IS OBSERVED

SAMPLING  DETECTION ERROR

(e) IDEAL WAVEFORM  (f) RINGING PHENOMENON

**EP 2 709 267 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7245981 A
- JP 2000232797 A
- JP 2009189176 A
- JP 2010074898 A
- US 20110057593 A1
- US 20100066284 A1
- US 20070194730 A1
- US 20110012544 A1